# EUROPEAN PATENT SPECIFICATION

(11) **EP 3 531 675 B1**
(45) Date of publication and mention of the grant of the patent: **28.10.2020**
(21) Application number: 17865709.4
(22) Date of filing: 26.05.2017
(51) Int. Cl.: H04M 1/725, G06F 9/54, G06F 9/451, G06F 9/455

(54) **METHOD AND DEVICE FOR INFORMATION EXCHANGE**
VERFAHREN UND VORRICHTUNG FÜR INFORMATIONSAUSTAUSCH
PROCÉDÉ ET DISPOSITIF D'ÉCHANGE D'INFORMATIONS

(30) Priority: 28.10.2016 CN 201610964401
(43) Date of publication of application: 28.08.2019
(73) Proprietor: Huawei Technologies Co., Ltd., Longgang District Shenzhen, Guangdong 518129 (CN)
(72) Inventor: XIONG, Yuanfeng, Shenzhen, Guangdong 518129 (CN)
(74) Representative: Thun, Clemens
(86) International application number: PCT/CN2017/086210
(87) International publication number: WO 2018/076685

(56) References cited:
- EP-A1- 2 469 817
- CN-A- 102 236 527
- CN-A- 102 968 343
- CN-A- 105 227 781
- US-A1- 2011 092 221

## Description

### TECHNICAL FIELD

This application relates to the field of communications technologies, and in particular, to an information exchange method and device.

### BACKGROUND

With development of electronic technologies, a mobile terminal (such as a mobile phone) has increasingly powerful functions, a user is also increasingly dependent on the mobile phone in daily life, and the mobile phone also stores an increasing amount of user information. For example, the mobile phone may store a photo, bank account information, memo information, and the like. The user may be reluctant to share, with another person, much private information (such as a private photo and the bank account information) stored in the mobile phone.

To prevent the another person from accessing the private information in the mobile phone when the another person uses the mobile phone, currently, many mobile phones support a multiuser solution. To be specific, a plurality of user spaces (such as an owner space, a guest space, and a sub-user space) may be configured for different users in the mobile phone, each user space is independent, and each user space has different mobile phone use permission. For example, the owner space has highest mobile phone use permission. In the owner space, mobile phone use permission of another user space (such as the guest space and the sub-user space) may be configured. However, the guest space has lower permission. In the guest space, only some information in the mobile phone can be operated based on the permission configured in the owner space.

EP 2 469 817 A1 refers to a mobile terminal including a communication unit configured to communicate with at least one other terminal; a memory configured to store at least first and second operating systems including at least first and second modes, respectively; and a controller configured to execute the first and second operating systems, to simultaneously display first and second information screens on a display unit of the mobile terminal corresponding to the first and second modes, to receive a sharing signal requesting information from one of the first and second information screens be shared with the other of the first and second information screens, and to selectively share the requested information between the first and second information screens based on a predetermined criterion.

However, an existing problem is as follows: In the multiuser solution, the plurality of user spaces in the mobile phone are independent of each other. In other words, each user space is equivalent to an independent system, and independent user spaces cannot exchange information.

For example, it is assumed that a user space 1 is a sub-user space that supports a transaction (for example, a user space that includes application software such as Taobao and Jingdong), and a user space 2 is a sub-user space that supports secure payment (for example, a user space that includes application software such as Alipay or a mobile banking client). In this case, even if the application software in the user space 1 initiates a transaction request, the application software in the user space 2 cannot receive the transaction request because the user space 1 and the user space 2 cannot exchange information, and therefore, the application software cannot complete a payment function in response to the transaction request.

### SUMMARY

This application provides an information exchange method and device, to implement information exchange between a plurality of user spaces.

This problem is solved by the subject matter of the independent claims. Further implemenation forms are provided in the dependent claims.

To achieve the foregoing objective, the following technical solutions are used in this application.

According to a first aspect, this application provides an information exchange method, the method may be applied to a terminal that includes a first user space and a second user space, the first user space and the second user space in the terminal are independent of each other, and the method includes: displaying, by the terminal, a first graphical user interface (Graphical User Interface, GUI), where the first GUI is a display interface of a first application in the first user space; receiving a first instruction in the first GUI, where the first instruction is used to request a second application to perform a first operation in response to the first instruction, and the second application is an application in the second user space; and transmitting, to the second user space after the first instruction is received, related information of the first operation by using a shared storage area in the terminal, to trigger the second application to perform the first operation in response to the first instruction.

In the information exchange method provided in this application, the shared storage area may be configured in the terminal. When receiving, in the first user space, the first instruction for accessing the second application in the second user space, the terminal may transmit, to the second user space after authentication performed on permission for the first user space to access the second user space succeeds, the related information of the first operation by using the shared storage area, to trigger the second application to perform the first operation in response to the first instruction. In other words, in the solution provided in this embodiment of the present invention, information can be exchanged between the first user space and the second user space.

With reference to the first aspect, in a first possible implementation, to ensure privacy of each user space, before the transmitting related information of the first operation to the second user space by using a shared storage area in the terminal, to trigger the second application to perform the first operation in response to the first instruction, the terminal may further perform authentication on permission for the first user space to access the second application in the second user space. Specifically, the transmitting, to the second user space after the first instruction is received, related information of the first operation by using a shared storage area in the terminal, to trigger the second application to perform the first operation in response to the first instruction may include: performing, after the first instruction is received, authentication on permission for the first user space to access the second application in the second user space; and transmitting, to the second user space after the permission authentication succeeds, the related information of the first operation by using the shared storage area, to trigger the second application to perform the first operation in response to the first instruction.

With reference to the first aspect or the first possible implementation, in a second implementation, the transmitting, to the second user space after the first instruction is received, related information of the first operation by using a shared storage area in the terminal, to trigger the second application to perform the first operation in response to the first instruction may include: writing, into the shared storage area after the first instruction is received, the related information of the first operation through a first interface; detecting, through a second interface, information stored in the shared storage area; and when the related information of the first operation is detected through the second interface, reading the related information of the first operation from the shared storage area, to trigger the second application to perform the first operation in response to the first instruction based on the related information of the first operation, where the first interface is configured to support the first user space in reading data from and writing data into the shared storage area and the second interface is configured to support the second user space in reading data from and writing data into the shared storage area.

In this application, the terminal can exchange data between the first storage area and the shared storage area through the first interface, and exchange data between the second storage area and the shared storage area through the second interface. In this way, the shared storage area may be used as a channel for exchanging information between the first user space and the second user space, to exchange information between the first user space and the second user space.

With reference to the first possible implementation, in a third possible implementation, the performing, after the first instruction is received, authentication on permission for the first user space to access the second application in the second user space includes: displaying a second GUI after the first instruction is received, where the second GUI includes a permission authentication window; receiving an access password entered by a user in the permission authentication window; and performing, based on the access password, authentication on the permission for the first user space to access the second application.

With reference to any one of the first aspect or the foregoing possible implementations, in a fourth possible implementation, after the transmitting, to the second user space after the first instruction is received, related information of the first operation by using a shared storage area in the terminal, to trigger the second application to perform the first operation in response to the first instruction, the method further includes: displaying a third GUI of the first application, where the third GUI includes processing result information of the first operation performed by the second application.

According to a second aspect, this application provides a terminal, the terminal includes a first user space and a second user space, the first user space and the second user space are independent of each other, and the terminal includes: a display module, an obtaining module, and a space interaction module. The display module is configured to display a first GUI, where the first GUI is a display interface of a first application in the first user space. The obtaining module is configured to receive a first instruction in the first GUI displayed by the display module, where the first instruction is used to request a second application to perform a first operation in response to the first instruction, and the second application is an application in the second user space. The space interaction module is configured to transmit, to the second user space after the obtaining module receives the first instruction, related information of the first operation by using a shared storage area in the terminal, to trigger the second application to perform the first operation in response to the first instruction.

With reference to the second aspect, in a first possible implementation, the space interaction module may include an authentication submodule and an interaction submodule. The authentication submodule is configured to perform, after the obtaining module receives the first instruction, authentication on permission for the first user space to access the second application in the second user space. The interaction submodule is configured to transmit, to the second user space after the permission authentication performed by the authentication submodule succeeds, the related information of the first operation by using the shared storage area, to trigger the second application to perform the first operation in response to the first instruction.

With reference to the second aspect or the first possible implementation, in a second implementation, the space interaction module is specifically configured to: write, into the shared storage area after the obtaining module receives the first instruction, the related information of the first operation through a first interface, where the related information of the first operation includes a first identifier, and the first interface is configured to support the first user space in reading data from and writing data into the shared storage area; detect, through a second interface, information stored in the shared storage area, where the second interface is configured to support the second user space in reading data from and writing data into the shared storage area; and when the related information of the first operation is detected through the second interface, read the related information of the first operation from the shared storage area, to trigger the second application to perform the first operation in response to the first instruction based on the related information of the first operation.

With reference to the second possible implementation, in a third possible implementation, the display module is further configured to display a second GUI after the obtaining module receives the first instruction, where the second GUI includes a permission authentication window; the obtaining module is further configured to receive an access password entered by a user in the permission authentication window; and the authentication submodule is specifically configured to perform, based on the access password received by the obtaining module, authentication on the permission for the first user space to access the second application.

With reference to any one of the second aspect or the foregoing possible implementations, in a fourth possible implementation, the display module is further configured to display a third GUI of the first application after the space interaction module triggers the second application to perform the first operation in response to the first instruction, where the third GUI includes processing result information of the first operation performed by the second application.

According to a third aspect, this application provides a terminal. The terminal includes a processor, a memory, and a display. The memory and the display are coupled to the processor, the memory is configured to store computer program code, the computer program code includes a computer instruction, and when the processor executes the computer instruction, the terminal performs the information exchange method according to any one of the first aspect or the possible implementations of the first aspect.

In addition, the memory includes a first storage area, a second storage area, and a shared storage area, the first storage area is corresponding to a first user space of the terminal, the second storage area is corresponding to a second user space of the terminal, and the first user space and the second user space are independent of each other. That the first user space and the second user space are independent of each other may specifically mean that when the terminal is in the first user space, the terminal cannot access or operate content in the second storage space; or when the terminal is in the second storage space, the terminal cannot access or operate content in the first storage space.

Specifically, the display is configured to display a first GUI, where the first GUI is a display interface of a first application in the first user space. The processor is configured to: receive a first instruction in the first GUI displayed by the display, where the first instruction is used to request a second application to perform a first operation in response to the first instruction, and the second application is an application in the second user space; and transmit, to the second user space after the first instruction is received, related information of the first operation by using a shared storage area, to trigger the second application to perform the first operation in response to the first instruction.

With reference to the third aspect, in a first possible implementation, that the processor is configured to transmit, to the second user space after the first instruction is received in the first GUI, related information of the first operation by using a shared storage area in the terminal, to trigger the second application to perform the first operation in response to the first instruction may mean that the processor is configured to: perform, after the first instruction is received, authentication on permission for the first user space to access the second application in the second user space; and transmit, to the second user space after the permission authentication succeeds, the related information of the first operation by using the shared storage area, to trigger the second application to perform the first operation in response to the first instruction.

With reference to the third aspect or the first possible implementation, in a second possible implementation, that the processor is configured to transmit, to the second user space after the first instruction is received in the first GUI, related information of the first operation by using a shared storage area in the terminal, to trigger the second application to perform the first operation in response to the first instruction may mean that the processor is specifically configured to: write, into the shared storage area after the first instruction is received, the related information of the first operation through a first interface; detect, through a second interface, information stored in the shared storage area; and when the related information of the first operation is detected through the second interface, read the related information of the first operation from the shared storage area, to trigger the second application to perform the first operation in response to the first instruction based on the related information of the first operation.

For detailed descriptions of the first interface and the second interface, refer to detailed descriptions in the first aspect and the possible implementations of the first aspect of this application. Details are not described herein again in this application.

With reference to the first possible implementation, in a third possible implementation, the display is further configured to display a second GUI after the first instruction is received, where the second GUI includes a permission authentication window; and the processor is configured to: receive an access password entered by a user in the permission authentication window displayed by the display; and perform, based on the access password, authentication on the permission for the first user space to access the second application.

With reference to any one of the third aspect or the foregoing possible implementations, in a fourth possible implementation, the display is further configured to display a third GUI of the first application after the processor triggers the second application to perform the first operation in response to the first instruction, where the third GUI includes processing result information of the first operation performed by the second application.

According to a fourth aspect, this application further provides a computer storage medium, the computer storage medium stores a computer instruction, and when the computer instruction runs on a terminal, the terminal performs the information exchange method according to any one of the first aspect or the possible implementations of the first aspect of this application.

According to a fifth aspect, this application further provides a computer program product, and when the computer program product runs on a computer, the computer performs the information exchange method according to any one of the first aspect or the possible implementations of the first aspect of this application.

It may be understood that the terminal in the third aspect and the fourth aspect, the computer storage medium in the fifth aspect, and the computer program product in the sixth aspect that are provided above are all configured to perform the corresponding methods provided above. Therefore, for beneficial effects that can be achieved by the terminal, the computer storage medium, and the computer program product, reference may be made to beneficial effects in the corresponding methods provided above. Details are not described herein again.

### BRIEF DESCRIPTION OF DRAWINGS

FIG. 1A to FIG. 1C are schematic diagrams of display interfaces of user spaces of a multiuser terminal according to an embodiment of the present invention;
FIG. 2A to FIG. 2C are schematic diagrams 1 of a display interface of an Artem space of a terminal according to an embodiment of the present invention;
FIG. 3 is a schematic structural diagram of hardware of a mobile phone according to an embodiment of the present invention;
FIG. 4 is a flowchart 1 of an information exchange method according to an embodiment of the present invention;
FIG. 5 is a flowchart 2 of an information exchange method according to an embodiment of the present invention;
FIG. 6 is a schematic distribution diagram of storage areas in a terminal according to an embodiment of the present invention;
FIG. 7A and FIG. 7B are flowcharts 3 of an information exchange method according to an embodiment of the present invention;
FIG. 8A and FIG. 8B are flowcharts 4 of an information exchange method according to an embodiment of the present invention;
FIG. 9A and FIG. 9B are schematic diagrams 1 of a display interface of a guest space of a terminal according to an embodiment of the present invention;
FIG. 10 is a schematic diagram of a display interface of a terminal according to an embodiment of the present invention;
FIG. 11A and FIG. 11B are schematic diagrams 2 of a display interface of a guest space of a terminal according to an embodiment of the present invention;
FIG. 12 is a schematic diagram 3 of a display interface of a guest space of a terminal according to an embodiment of the present invention;
FIG. 13A and FIG. 13B are schematic diagrams 4 of a display interface of a guest space of a terminal according to an embodiment of the present invention;
FIG. 14 is a schematic diagram 5 of a display interface of a guest space of a terminal according to an embodiment of the present invention;
FIG. 15 is a schematic diagram 6 of a display interface of a guest space of a terminal according to an embodiment of the present invention;
FIG. 16A and FIG. 16B are schematic diagrams 7 of a display interface of a guest space of a terminal according to an embodiment of the present invention;
FIG. 17A to FIG. 17C are flowcharts 5 of an information exchange method according to an embodiment of the present invention;
FIG. 18 is a schematic diagram 2 of a display interface of an Artem space of a terminal according to an embodiment of the present invention;
FIG. 19A and FIG. 19B are schematic diagrams 3 of a display interface of an Artem space of a terminal according to an embodiment of the present invention;
FIG. 20A to FIG. 20C are schematic diagrams 4 of a display interface of an Artem space of a terminal according to an embodiment of the present invention;
FIG. 21 is a schematic structural diagram 1 of composition of a terminal according to an embodiment of the present invention;
FIG. 22 is a schematic structural diagram 2 of composition of a terminal according to an embodiment of the present invention; and
FIG. 23 is a schematic structural diagram 3 of composition of a terminal according to an embodiment of the present invention.

### DESCRIPTION OF EMBODIMENTS

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions in the embodiments of the present invention, unless otherwise specified, "a plurality of' means "two or more".

An embodiment of the present invention provides an information exchange method. The method may be applied to a multiuser terminal, and may be specifically applied to a process of exchanging information between a plurality of user spaces of the multiuser terminal. The multiuser terminal in this embodiment of the present invention may include the plurality of user spaces. The plurality of user spaces are independent of each other. In other words, the user spaces cannot exchange information.

In this embodiment of the present invention, it is assumed that the terminal includes a first user space and a second user space. That "the first user space and the second user space are independent of each other" means that a storage area (for example, a first storage area) corresponding to the first user space and a storage area (for example, a second storage area) corresponding to the second user space are independent of each other. In addition, when the terminal is in the first user space, the terminal cannot access or operate data stored in the second storage area; when the terminal is in the second user space, the terminal cannot access or operate data stored in the first storage area.

For example, the multiuser terminal may be a mobile phone, a wearable device, an augmented reality (augmented reality, AR) device or a virtual reality (virtual reality, VR) device, a tablet computer, a notebook computer, an ultra-mobile personal computer (ultra-mobile personal computer, UMPC), a netbook, a personal digital assistant (personal digital assistant, PDA), or the like that includes a plurality of user spaces. This is not limited in this embodiment of the present invention.

For example, in this embodiment of the present invention, that the multiuser terminal is a mobile phone 100 is used as an example to describe the multiuser terminal in this embodiment of the present invention.

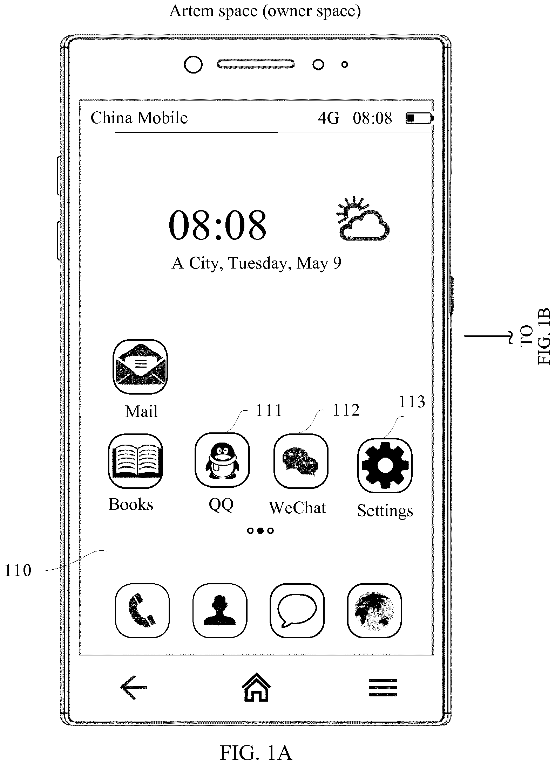

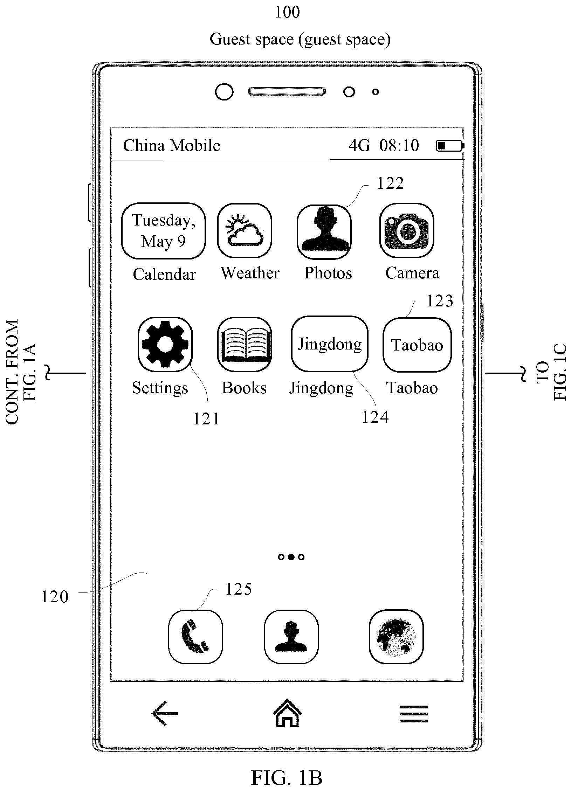

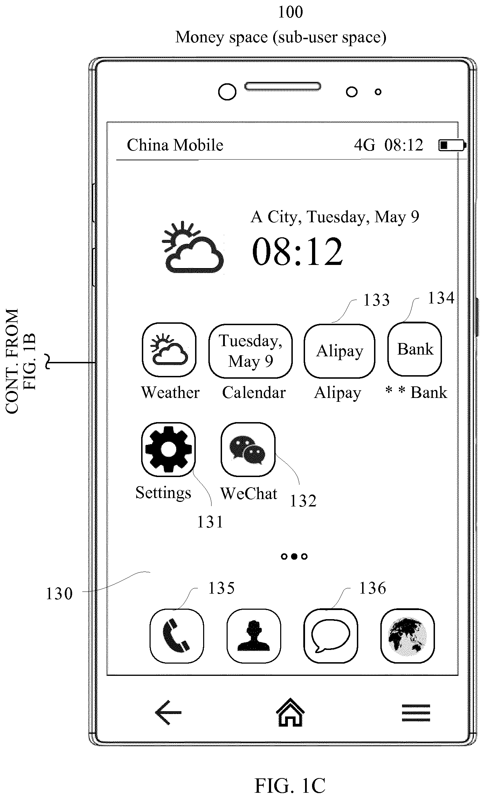

As shown in FIG. 1A to FIG. 1C, three user spaces are configured in the terminal 100: an Artem space (owner space) 110, a guest space (guest space) 120, and a money space (sub-user space) 130. As shown in FIG. 1A to FIG. 1C, a user may install a same application (Application, app) or different applications in different user spaces of the terminal 110. For example, as shown in FIG. 1A, apps such as "QQ" 111 and "WeChat" 112 are installed in the Artem space 110 of the terminal 100. As shown in FIG. 1B, apps such as "Jingdong" 124 and "Taobao" 123 are installed in the guest space 120 of the terminal 100. As shown in FIG. 1C, apps such as "WeChat" 132, "Alipay" 133, and "** bank" 134 are installed in the money space 130 of the terminal 100.

The Artem space 110, the money space 130, and the guest space 120 are independent of each other. In other words, a storage area corresponding to the Artem space 110, a storage area corresponding to the money space 130, and a storage area corresponding to the guest space 120 are independent of each other, and data/information cannot be exchanged between the Artem space 110, the money space 130, and the guest space 120 within the terminal 100. For example, the apps in the Artem space 110, the apps in the money space 130, and the apps in the guest space 120 cannot exchange data/information within the terminal 100. For example, the terminal 110 cannot complete a payment operation in the "Alipay" 133 in the money space 130 in response to a payment command initiated by a user in the "Taobao" 123 in the guest space 120. The terminal 110 cannot read a photo in "photos" 122 in the guest space 120 or read a photo in "photos" 114 in the Artem space 110 in response to a photo invocation command initiated by a user in the "WeChat" 132 in the money space 130. When a user wants to store a photo received from the "WeChat" 132 in the money space 130, the terminal cannot store the photo in the system application "photos" 122 in the guest space 120 in response to a command of storing the photo received from the "WeChat" 132.

It should be noted that a same app may be installed in different user spaces of the terminal 100. For example, as shown in FIG. 1A and FIG. 1B, the "WeChat" 112 is installed in the Artem space 110 of the terminal 100, and the "WeChat" 132 is installed in the money space 130 of the terminal 100. In addition, the "exchanging data/information within the terminal 100" in this embodiment of the present invention does not include sending a message by a user to the "WeChat" 132 in the money space 120 through a wireless network by using the "WeChat" 112 in the Artem space 110. From a user perspective, the user spaces of the terminal 100 are independent. They do not affect each other and cannot communicate with each other.

It may be understood that the Artem space 110, the money space 130, and the guest space 120 are independent of each other because data in the Artem space 110, data in the money space 130, and data in the guest space 120 is stored in different storage areas (for example, different storage areas in a hard disk) of the terminal 100. For example, the data in the Artem space 110 is stored in a storage area 1, the data in the money space 130 is stored in a storage area 2, and the data in the guest space 120 is stored in the storage area 3. In addition, these storage areas are independent of each other. For example, these three storage areas: the storage area 1, the storage area 2, and the storage area 3 are independent of each other. In addition, when the terminal 100 is in any one of the Artem space 110, the money space 130, and the guest space 120, the terminal 100 cannot access or operate data stored in storage areas of the other two user spaces. For example, when the terminal 100 is in the Artem space 110, the terminal 100 cannot access or operate the data stored in the storage area 2 or the data stored in the storage area 3.

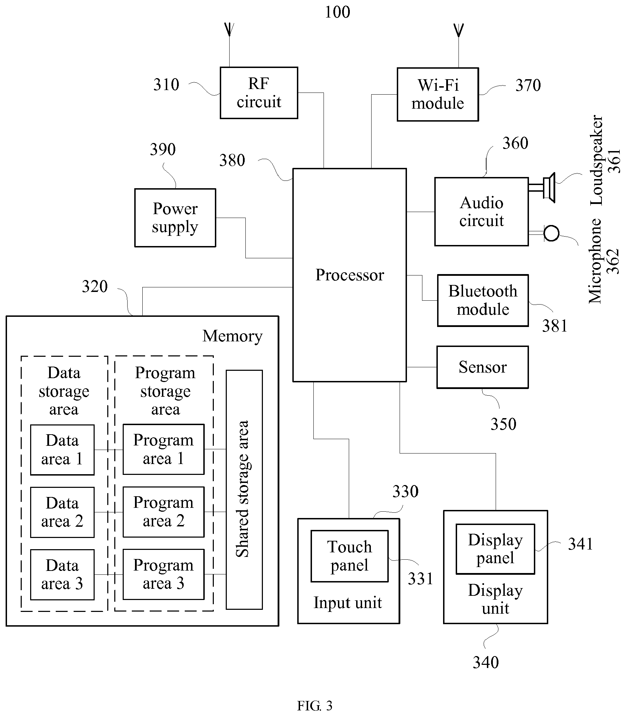

Referring to FIG. 3 and related descriptions, the data in the Artem space 110, the data in the money space 130, and the data in the guest space 120 is stored in different storage areas.

A user may control, by triggering a "users" option in a "setting page" of any user space (for example, the Artem space 110) of the terminal 100, the terminal 100 to enter a multiuser interface and switch between the three user spaces by using the multiuser interface of the terminal.

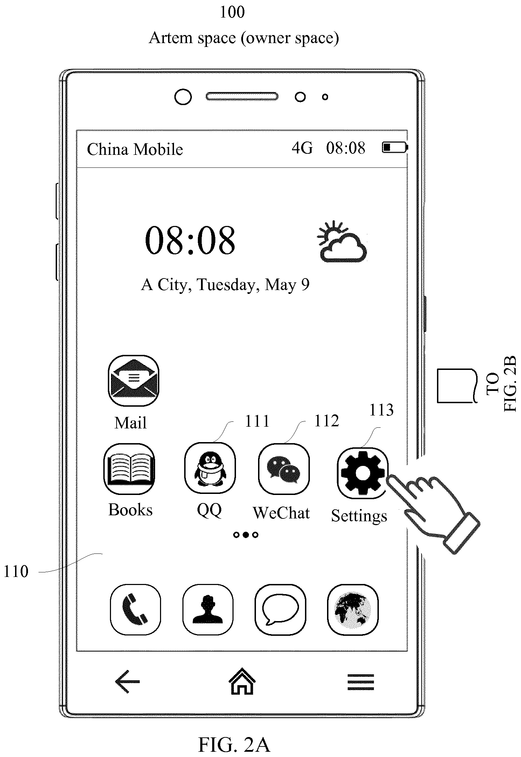

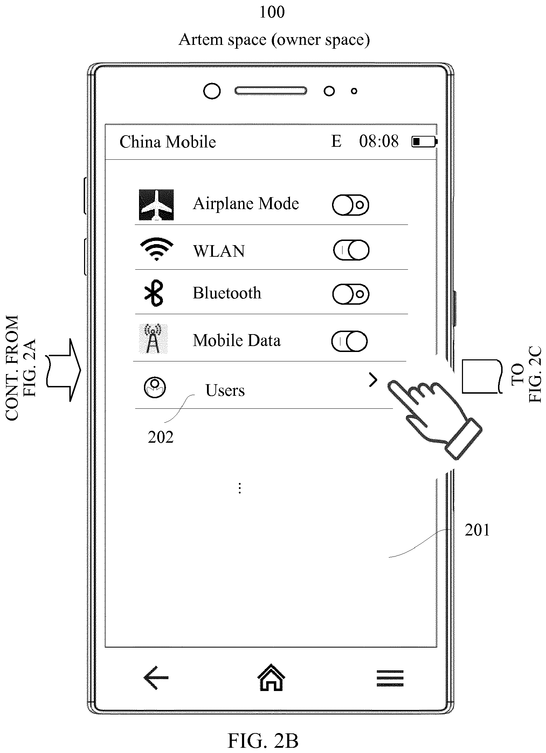

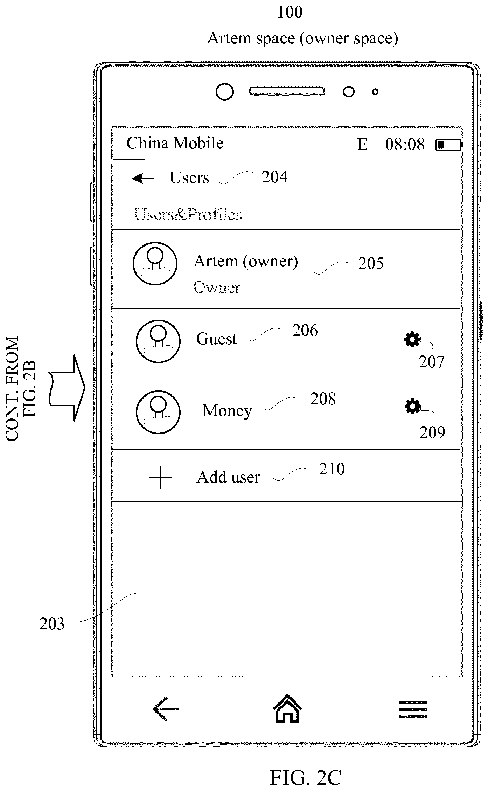

For example, the terminal 100 is currently in the Artem space 110. When the user taps a "settings" icon 113 shown in FIG. 2A, the terminal 100 may display a graphical user interface (Graphical User Interface, GUI) 201 shown in FIG. 2B. The GUI 201 shown in FIG. 2B includes a "users" option 202, and after the user taps the "users" option 202 shown in FIG. 2B, the terminal 100 may display a GUI 203 shown in FIG. 2C. The GUI 203 shown in FIG. 2C includes a return button 204, an "Artem (owner)" option 205, a "guest" option 206, a setting button 207 of the guest space, a "money" option 208, a setting button 209 of the money space, and an "add user" option 210.

After the user taps the return button 204 shown in FIG. 2C, the terminal may display the "setting interface" 201 shown in FIG. 2B. The "Artem (owner)" option 205 shown in FIG. 2C is corresponding to the Artem space (owner space), the "guest" option 206 is corresponding to the guest space, and the "money" option 208 is corresponding to the money space. The "add user" option 210 is used to add a new user space. The setting button 207 of the guest space is used to set permission for the guest space in the Artem space, namely, permission for the guest space to access a system application of the terminal 100. The setting button 209 of the money space is used to set permission for the money space in the Artem space, namely, permission for the money space to access a system application of the terminal 100. For example, the user may make a call in the guest space by using a "phone" icon 125 shown in FIG. 1B. In other words, the guest space has permission to make or answer a call. However, compared with the money space that has SMS message sending/receiving permission (a "messages" icon 136 shown in FIG. 1C), the guest space does not have the SMS message sending/receiving permission.

For example, the terminal 100 is to switch from the Artem space to the guest space. When the user taps the "guest" option 206 shown in FIG. 2C, the terminal 100 may display an authentication window of the guest space and prompt the user to enter a login password of the guest space. After authentication succeeds, the terminal 100 may access the guest space and display a GUI 120 shown in FIG. 1B. When the user taps the setting button 207 in the guest space shown in FIG. 2C, the terminal 100 may also display the authentication window of the guest space and prompt the user to enter the login password or an authorization password of the guest space. After authentication succeeds, the terminal 100 may set permission for the guest space. A manner in which the terminal 100 switches from the Artem space to the money space is similar to a manner in which the terminal 100 switches from the Artem space to the guest space. Details are not described herein again in this embodiment of the present invention.

The terminal 100 may also switch from the money space or the guest space to the Artem space. A manner in which the terminal 100 switches from the money space or the guest space to the Artem space is similar to the manner in which the terminal 100 switches from the Artem space to the guest space. Details are not described herein again in this embodiment of the present invention.

Different from the above, in the money space or the guest space, the user cannot set permission for another user space. In some embodiments, in the money space or the guest space, the user cannot add a new user space for the terminal 100 either.

The following specifically describes constituent components of the mobile phone 100 with reference to FIG. 3.

An RF circuit 310 may be configured to receive and send signals in an information receiving and sending process or a call process. The RF circuit 310 may receive downlink information from a base station, and then transmit the downlink information to a processor 380 for processing; and send uplink data to the base station. Generally, the RF circuit includes but is not limited to devices such as an antenna, at least one amplifier, a transceiver, a coupler, a low noise amplifier, and a duplexer. In addition, the RF circuit 310 may further communicate with a network and another mobile device through wireless communication. Any communications standard or protocol may be used for the wireless communication, and includes but is not limited to a Global System for Mobile Communications, a general packet radio service, Code Division Multiple Access, Wideband Code Division Multiple Access, Long Term Evolution, an email, a short message service, or the like.

A memory 320 may be configured to store a software program and data. The processor 380 runs the software program and the data that are stored in the memory 320, to perform various functions of the mobile phone 100 and data processing. The memory 320 may mainly include a program storage area and a data storage area. The program storage area may store an operating system, an application program required for at least one function (such as a voice play function and an image play function), and the like. The data storage area may store data (such as audio data and a phonebook) created based on use of the mobile phone 100 and the like. In addition, the memory 320 may include a high-speed random access memory, and may further include a nonvolatile memory, for example, at least one magnetic disk storage device, a flash storage device, or another volatile solid-state storage device. In the following embodiments, the memory 320 stores an operating system for running the mobile phone 100, for example, an iOS® operating system developed by Apple, an Android® open-source operating system developed by Google, or a Windows® operating system developed by Microsoft.

As shown in FIG. 3, each of the program storage area and the data storage area of the memory 320 in this embodiment of the present invention may include at least two storage areas. Based on the foregoing example, as shown in FIG. 3, the program storage area may include three areas: a program area 1, a program area 2, and a program area 3; and the data storage area may include three areas: a data area 1, a data area 2, and a data area 3.

The program area 1 is used to store an operating system of the Artem space, an application program required for at least one function (such as a sound play function and an image play function) of the Artem space, and the like. The data area 1 is used to store data (such as audio data and a phonebook) created during use of the Artem space and the like. The program area 2 is used to store an operating system of the money space, an application program required for at least one function (such as a payment function) of the money space, and the like, and the data area 2 is used to store data (such as payment information) created during use of the money space and the like. The program area 3 is used to store an operating system of the guest space, an application program required for at least one function (such as a shopping function) of the guest space, and the like, and the data area 3 is used to store data (such as shopping information) created during use of the guest space and the like.

It should be noted that, division of the storage areas in the memory 320 shown in FIG. 3 may be logical division of a storage area of the Artem space, a storage area of the money space, and a storage area of the guest space. For example, the data area 1 and the program area 1 may be a same storage area (namely, the storage area of the Artem space), the data area 2 and the program area 2 may be a same storage area (namely, the storage area of the money space), and the data area 3 and the program area 3 may be a same storage area (namely, the storage area of the guest space). This is not limited in this embodiment of the present invention.

It should be noted that the storage area of the Artem space, the storage area of the money space, and the storage area of the guest space are independent of each other, and therefore, information cannot be exchanged between a plurality of users. To exchange information between the plurality of users, in this embodiment of the present invention, a shared area 321 is added to the memory 320, and after being authenticated, the operating system of the Artem space, the operating system of the money space, and the operating system of the guest space can access the shared area 321. The operating systems of the three user spaces may access the shared area, to exchange information between the plurality of users.

An input unit 330 (namely, a touchscreen) may be configured to: receive entered digit or character information, and generate signal input related to user setting and function control of the mobile phone 100. Specifically, the input unit 330 may include a touch panel 331 disposed on a front face of the mobile phone 100. The touch panel 331 may collect a touch operation of a user on or near the touch panel 331 (for example, an operation performed by the user on or near the touch panel 331 by using any suitable object or accessory such as a finger or a stylus), and drive a corresponding connection apparatus based on a preset program. Optionally, the touch panel 331 may include two parts: a touch detection apparatus and a touch controller (not shown in the figure). The touch detection apparatus detects a touch orientation of the user, detects a signal generated during the touch operation, and transfers the signal to the touch controller. The touch controller receives touch information from the touch detection apparatus, converts the touch information into touch point coordinates, and sends the touch point coordinates to the processor 380. In addition, the touch controller can receive and execute an instruction sent by the processor 380. In addition, the touch panel 331 may be implemented by using a plurality of types such as a resistive type, a capacitive type, an infrared ray, and a surface acoustic wave.

A display unit 340 (namely, a display screen) may be configured to display information entered by the user or information provided for the user, and GUIs of various menus of the mobile phone 100. The display unit 340 may include a display panel 341 (which may also be referred to as a display screen) disposed on a front face of the mobile phone 100. In other words, the display panel 341 and a display panel 342 are disposed on two opposite faces of the mobile phone 100. The display panel 341 may be configured in a form of a liquid crystal display, a light-emitting diode, or the like. The touch panel 331 covers the display panel 341. The touch panel 331 detects a touch operation on or near the touch panel 331, and then transfers the touch operation to the processor 380 to determine a touch event. Then the processor 380 provides a corresponding visual output on the display panel 341 based on a type of the touch event. Although in FIG. 3, the touch panel 331 and the display panel 341 serve as two independent components to implement input and input functions of the mobile phone 100, in some embodiments, the touch panel 331 and the display panel 341 may be integrated to implement the input and output functions of the mobile phone 100, and the integrated touch panel 331 and display panel 341 may be referred to as a touchscreen.

In some other embodiments, a pressure sensor may be further configured on each of the touch panel 331 and a touch panel 332, so that the touch panel can further detect pressure of the touch operation when the user performs a touch operation on the touch panel. Therefore, the mobile phone 100 can more accurately detect the touch operation.

The mobile phone 100 may further include at least one sensor 350, for example, a light sensor, a motion sensor, and another sensor. Specifically, the light sensor may include an ambient light sensor and a proximity sensor. An ambient light sensor 351 may adjust luminance of the display panel 341 and/or the display panel 342 based on intensity of ambient light. An optical proximity sensor 352 is disposed on the front face of the mobile phone 100. When the mobile phone 100 moves to an ear, the mobile phone 100 powers off the display panel 341 based on detection of the optical proximity sensor 352, and can also power off the display panel 342. In this way, power consumption of the mobile phone 100 can be further reduced. As a type of motion sensor, an accelerometer sensor may detect a value of acceleration in each direction (usually on three axes), may detect a value and a direction of gravity in a static state, and may be used in an application for recognizing a mobile phone posture (such as screen switching between a landscape mode and a portrait mode, a related game, or magnetometer posture calibration), a function related to vibration recognition (such as a pedometer or a knock), or the like. Other sensors such as a gyroscope, a barometer, a hygrometer, a thermometer, or an infrared sensor may be further configured in the mobile phone 100. Details are not described herein.

An audio circuit 360, a loudspeaker 361, and a microphone 362 may provide audio interfaces between the user and the mobile phone 100. The audio circuit 360 may convert received audio data into an electrical signal, and transmit the electrical signal to the loudspeaker 361. The loudspeaker 361 converts the electrical signal into a sound signal and outputs the sound signal. In addition, the microphone 362 converts the collected sound signal into an electrical signal. The audio circuit 360 receives the electrical signal, converts the electrical signal into audio data, and then outputs the audio data to an RF circuit 310, so that the RF circuit 310 sends the audio data to, for example, another mobile phone, or outputs the audio data to the memory 320 for further processing.

Wi-Fi belongs to a short-range wireless transmission technology. By using a Wi-Fi module 370, the mobile phone 100 can help the user receive and send emails, browse web pages, and access streaming media and the like, thereby providing wireless broadband Internet access for the user.

The processor 380 is a control center of the mobile phone 100, and is connected to parts of the mobile phone through various interfaces and lines. The processor 380 runs or executes the software program stored in the memory 320 and invokes the data stored in the memory 320, to perform various functions of the mobile phone 100 and data processing, thereby performing overall monitoring on the mobile phone. In some embodiments, the processor 380 may include one or more processing units. An application processor and a modem processor may be further integrated into the processor 380. The application processor mainly processes an operating system, a user interface, an application program, and the like. The modem processor mainly processes wireless communication. It may be understood that the modem processor may alternatively be not integrated into the processor 180.

A Bluetooth module 381 is configured to exchange information with another device by using a short-range communications protocol such as Bluetooth. For example, the mobile phone 100 may establish, by using the Bluetooth module 381, a Bluetooth connection to a wearable electronic device (for example, a smartwatch) that also has a Bluetooth module, to exchange data.

The mobile phone 100 further includes a power supply 390 (for example, a battery) that supplies power to components. The power supply may be logically connected to the processor 380 by using a power management system, to implement functions such as charging, discharging, and power consumption management by using the power management system. The mobile phone 100 may further include cameras such as a front-facing camera, a rear-facing camera, and the like. Details are not described herein.

All methods in the following embodiments may be implemented in the mobile phone 100 having the foregoing hardware structure.

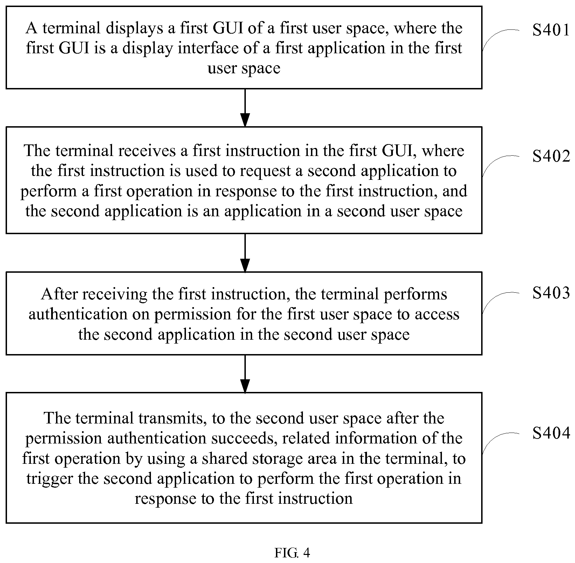

An embodiment of the present invention provides an information exchange method. The method may be applied to a terminal that may have at least two user spaces (such as a first user space and a second user space). The first user space and the second user space are independent of each other. Further, the terminal provided in this embodiment of the present invention may further include a shared storage area. The shared storage area may be used as a channel for exchanging information between the first user space and the second user space. As shown in FIG. 4, the information exchange method may include S401 to S404.

S401. A terminal displays a first GUI of a first user space, where the first GUI is a display interface of a first application in the first user space.

The first user space may be any one of at least two user spaces of the terminal, and the first application may be any app in the first user space.

For example, the first user space may be any one of the guest space 120, the Artem space 110, or the money space 130 of the terminal 110 shown in FIG. 1A to FIG. 1C. When the first user space is the Artem space 110 shown in FIG. 1A, the first application may be any app such as the "QQ" 111 or the "WeChat" 112 shown in FIG. 1A.

For example, the terminal may display a display interface of the first application (the "WeChat" 112) in response to a start instruction of a user for the first application (such as the "WeChat" 112 in the Artem space 110) in the first user space.

S402. The terminal receives a first instruction in the first GUI, where the first instruction is used to request a second application to perform a first operation in response to the first instruction, and the second application is an application in a second user space.

For example, the first instruction may be an order payment instruction received by the user in a GUI of the "Taobao" shown in FIG. 1B. The order payment instruction is used to request the "Alipay" 133 in the money space 130 shown in FIG. 1C to perform an order payment operation in response to the order payment instruction.

Alternatively, the first instruction may be a storage instruction that is received by the user in the "WeChat" 112 in the Artem space 110 shown in FIG. 1A and that is used to store a video or a picture received in the "WeChat" 112. The storage instruction is used to request the "photos" 122 in the guest space 120 shown in FIG. 1B to store the video or the picture.

Certainly, the first instruction includes but is not limited to the instruction in the foregoing example. The first instruction may be any instruction used by the first application in the first user space to invoke the second application in the second user space to perform the first operation. Details are not described herein again in this embodiment of the present invention.

An application the same as the second application may also be installed in the first user space of the terminal. Because the first instruction requests the second application to perform the first operation in response to the first instruction, even if the application the same as the second application is installed in the first user space, "the application the same as the second application" that is installed in the first user space cannot perform the first operation in response to the first instruction. Instead, the second application (the application in the second user space) needs to perform the first operation in response to the first instruction.

S403. After receiving the first instruction, the terminal performs authentication on permission for the first user space to access the second application in the second user space.

The first user space and the second user space are independent of each other. Although a shared storage area in the terminal may be used as a channel for exchanging information between the first user space and the second user space, to ensure privacy of each user space, the terminal may further perform authentication on permission for the first user space to access the second application in the second user space before "transmitting related information of the first operation to the second user space by using the shared storage area in the terminal, to trigger the second application to perform the first operation in response to the first instruction" (in other words, before S404 is performed).

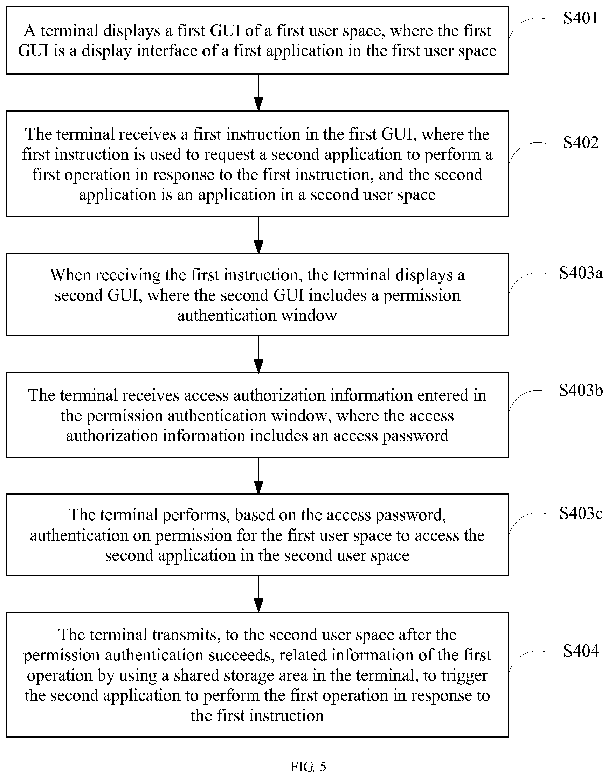

For example, a method in which the terminal performs, after receiving the first instruction, authentication on permission for the first user space to access the second application in the second user space may include S403a to S403c. In other words, as shown in FIG. 5, S403 in FIG. 4 may include S403a to S403c.

S403a. When receiving the first instruction, the terminal displays a second GUI, where the second GUI includes a permission authentication window.

The permission authentication window is used to enter an access password used by the first user space to access the second application in the second user space.

S403b. The terminal receives an access password entered in the permission authentication window.

For example, the access password may be an unlocking password when the terminal is in a lock screen state of the second user space. When the terminal is in different user spaces, unlocking passwords specific to lock screen states of the terminal may be different.

Alternatively, the access password may be a preset dedicated password used to perform authentication on permission for the first user space of the terminal to access any application in the second user space. For example, when the second user space is the Artem space 110 shown in FIG. 1A, the access password may be a password (referred to as a permission authentication password) used to perform authentication on permission for the guest space 120 and/or the money space 130 to access any app in the Artem space 110. A permission authentication password used by the guest space 120 to access the app in the Artem space 110 may be the same as or different from a permission authentication password used by the money space 130 to access the app in the Artem space 110. In addition, permission authentication passwords used by the guest space 120 to access different apps in the Artem space 110 may be the same or different.

For example, the access password may be any information such as fingerprint information, a character string, or face information that may be used as password information. This is not limited in this embodiment of the present invention.

S403c. The terminal performs, based on the access password, authentication on permission for the first user space to access the second application in the second user space.

The terminal may pre-store access passwords for performing authentication on permission for mutual access to user spaces. The access passwords stored in the terminal are in a one-to-one correspondence with identifiers of to-be-accessed user spaces. Therefore, the terminal may obtain a pre-stored access password corresponding to an identifier of the second user space.

When an access password entered in the permission authentication window is the same as the pre-stored access password, it indicates that the permission authentication succeeds, and the first user space has permission to access the second application in the second user space; or when an access password entered in the permission authentication window is different from the pre-stored access password, it indicates that the permission authentication fails, and the first user space does not have permission to access the second application in the second user space.

S404. The terminal transmits, to the second user space after the permission authentication succeeds, related information of the first operation by using a shared storage area in the terminal, to trigger the second application to perform the first operation in response to the first instruction.

After the permission authentication succeeds, the first user space can exchange information with a shared space. To be specific, if authentication performed on permission for the first user space succeeds, it indicates that the first user space has permission to access the second application in the second user space, and a first user terminal may exchange information with the shared space, to trigger, by using the shared space in the terminal, the second application to perform the first operation in response to the first instruction.

It should be noted that, S403 is optional. In this embodiment of the present invention, S403 may not be performed. Instead, after the first instruction is received, the related information of the first operation is transmitted to the second user space by using the shared storage area in the terminal, to trigger the second application to perform the first operation in response to the first instruction.

In the information exchange method provided in this embodiment of the present invention, the shared storage area may be configured in the terminal. When receiving, in the first user space, the first instruction for accessing the second application in the second user space, the terminal may transmit, to the second user space after authentication performed on permission for the first user space to access the second user space succeeds, the related information of the first operation by using the shared storage area, to trigger the second application to perform the first operation in response to the first instruction. In other words, in the solution provided in this embodiment of the present invention, information can be exchanged between the first user space and the second user space.

Further, after S404, the method in this embodiment of the present invention may further include S405.

S405. The terminal displays a third GUI of the first user space, where the third GUI includes processing result information of the first operation performed by the second application.

After triggering the second application in the second user space to perform the first operation in response to the first instruction, the terminal may display, in the third GUI of the first user space, the processing result information of the first operation performed by the second application.

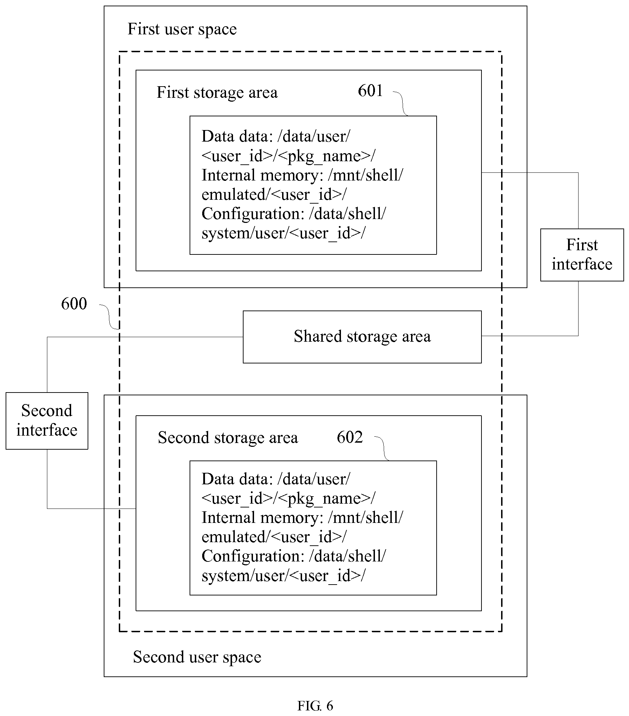

FIG. 6 is a schematic diagram of an example of a storage space 600 of a terminal according to an embodiment of the present invention. It is assumed that the terminal includes the first user space and the second user space, and as shown in FIG. 6, the storage space 600 of the terminal may include a first storage area, a second storage area, and a shared storage area. The first user space is corresponding to the first storage area, and the second user space is corresponding to the second storage area.

The first storage area may be used to store data 601 such as an operating system (namely, a first operating system) of the first user space, configuration information of the first user space, related data of each app in the first user space, and data created when the user uses the first user space (for example, audio data or a phonebook). The second storage area may be used to store data 602 such as an operating system (namely, a second operating system) of the second user space, configuration information of the second user space, related data of each app in the second user space, and data created when the user uses the second user space (for example, audio data or a phonebook). The shared storage area is used to buffer data or an instruction transmitted when the first user space and the second user space exchange information. The first storage area, the second storage area, and the shared storage area are independent of each other.

For example, the shared storage area in this embodiment of the present invention may be a storage area that is independent of the first storage area and the second storage area in a hard disk or a memory of the terminal. Alternatively, the shared storage area may be an external secure digital (Secure Digital, SD) card. This is not limited in this embodiment of the present invention.

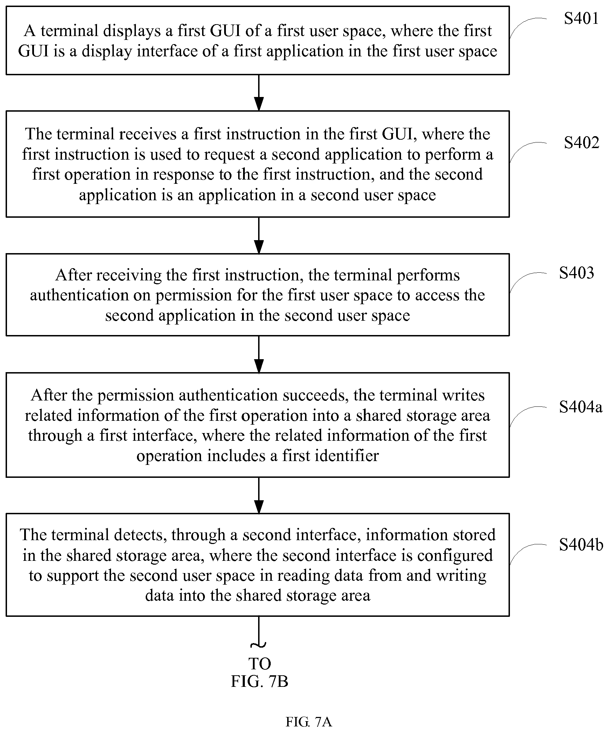

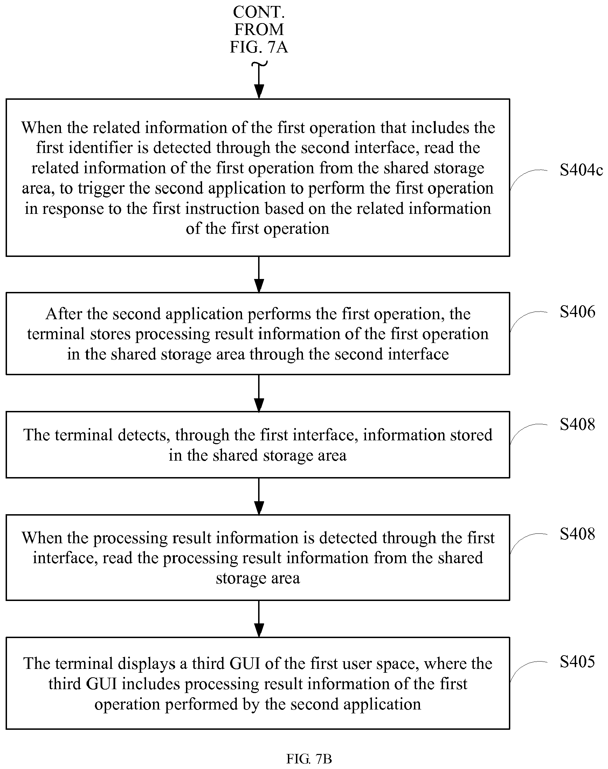

A first interface shown in FIG. 6 is configured to support the first user space in reading data from and writing data into the shared storage area, and a second interface is configured to support the second user space in reading data from and writing data into the shared storage area. When the terminal is in the first user space, the terminal cannot directly access the second storage area. However, after the "authentication performed on permission for the first user space to access the second user space" succeeds, the terminal may exchange data between the first storage area and the shared storage area through the first interface, and exchange data between the second storage area and the shared storage area through the second interface. In this way, the shared storage area may be used as a channel for exchanging information between the first user space and the second user space, to exchange information between the first user space and the second user space. As shown in FIG. 7A and FIG. 7B, S404 shown in FIG. 4 may be replaced with S404a to S404c.

S404a. After the permission authentication succeeds, the terminal writes related information of the first operation into the shared storage area through a first interface.

For example, the related information of the first operation may include operation information of the first operation and data information of the first operation. The operation information of the first operation is used to instruct the second application to perform specific operation content of the first operation, and the data information of the first operation is data information required to instruct the second application to perform the first operation.

For example, it is assumed that the first operation is an order payment operation, related information of the order payment operation may include operation information (for example, instruction information for instructing the second application to perform the "order payment" operation) of the order payment operation and data information (for example, an order amount) required for the order payment operation. It is assumed that the first operation is a picture storage operation, related information of the picture storage operation may include operation information (for example, instruction information for instructing the second application to perform the "picture storage" operation) of the picture storage operation and data information (for example, a to-be-stored picture) required for the picture storage operation.

In this embodiment of the present invention, a read/write interface (for example, the first interface) may be added to an existing operating system (such as an Android system), data is written into the shared storage area through the read/write interface, and data is read from the shared storage area through the read/write interface. For example, a read interface may be a private interface, namely, a non-standard interface.

Further, the related information of the first operation may further include a first identifier, and the first identifier includes an identifier of the second user space or an identifier of the second application.

S404b. The terminal detects, through a second interface, information stored in the shared storage area, where the second interface is configured to support the second user space in reading data from and writing data into the shared storage area.

In this embodiment of the present invention, all operating systems of the user spaces may periodically read the information stored in the shared storage area. When reading information or an instruction corresponding to a user space of an operating system, the operating system may invoke a related application in the operating system, to perform a related operation in response to the read information or instruction.

S404c. When the related information of the first operation is detected through the second interface, read the related information of the first operation from the shared storage area, to trigger the second application to perform the first operation in response to the first instruction based on the related information of the first operation.

It may be understood that the related information of the first operation may further include the first identifier and the first identifier is the identifier of the second user space or the identifier of the second application, and therefore, after reading the related information of the first operation through the second interface, the terminal may identify that the identifier included in the related information of the first operation is the first identifier. In this case, the terminal may determine that the first identifier is a related identifier of the second user space, and may invoke a related application (for example, the second application) in the second user space to perform the first operation in response to the first instruction.

Further, after triggering the second application to perform the first operation in response to the first instruction, the terminal may return the processing result information of the first operation to the first user space by using the shared storage area. Specifically, after S404 or S404c, the method in this embodiment of the present invention may further include S406. For example, as shown in FIG. 7B, after S404c, the method in this embodiment of the present invention may further include S406 to S408.

S406. After the second application performs the first operation, the terminal stores processing result information of the first operation in the shared storage area through the second interface.

It may be understood that, the terminal performs the first operation in response to the first instruction, and then the terminal returns the processing result information of the first operation to the first user space by using the shared storage area. Therefore, when storing the processing result information of the first operation in the shared storage area through the second interface, the terminal may directly store the processing result information of the first operation in the shared storage area without performing permission authentication.

Certainly, to ensure privacy of each user space, after the second operating system performs the first operation, before the second operating system stores, in the shared storage area, a second instruction that includes a processing result of the first operation, the second operating system further needs to perform, in the first user space, authentication on permission for the second user space to access the first user space. After authentication performed on permission for the second user space to access the first user space succeeds, the second operating system may store, in the shared storage area, the second instruction that includes the processing result of the first operation.

For a method for performing, in the first user space, authentication on permission for the second user space to access the first user space, refer to the foregoing specific method for performing, in the first user space, authentication on permission for the first user space to access the second application in the second user space. Details are not described herein again in this embodiment of the present invention.

Further, the processing result information may further include a second identifier, and the second identifier is an identifier of the first user space or an identifier of the first application.

S407. The terminal detects, through the first interface, information stored in the shared storage area.

S408. When the processing result information of the first operation is detected through the first interface, read the processing result information from the shared storage area.

As shown in FIG. 7B, after S408, the method in this embodiment of the present invention may further include the foregoing S405.

In the information exchange method provided in this embodiment of the present invention, the terminal can exchange data between the first storage area and the shared storage area through the first interface, and exchange data between the second storage area and the shared storage area through the second interface. In this way, the shared storage area may be used as a channel for exchanging information between the first user space and the second user space, to exchange information between the first user space and the second user space.

For example, in this embodiment of the present invention, the following two application scenarios in which information is exchanged between the three user spaces (the Artem space 110, the money space 130, and the guest space 120) of the mobile phone 100 shown in FIG. 1A to FIG. 1C are used as an example to describe the information exchange method provided in this embodiment of the present invention. A read/write interface 1 is configured to support the Artem space 110 in reading/writing the data in the shared storage area. A read/write interface 2 is configured to support the guest space 120 in reading/writing the data in the shared storage area. A read/write interface 3 is configured to support the money space 130 in reading/writing the data in the shared storage area.

In a first application scenario, it is assumed that the terminal 100 is in the guest space 120. After the user selects a commodity in the "Taobao" 123 in the guest space 120 and places an order, an order payment instruction is initiated for the "Alipay" 133 in the money space 130, to trigger the "Alipay" 133 in the money space 130 to perform an order payment operation.

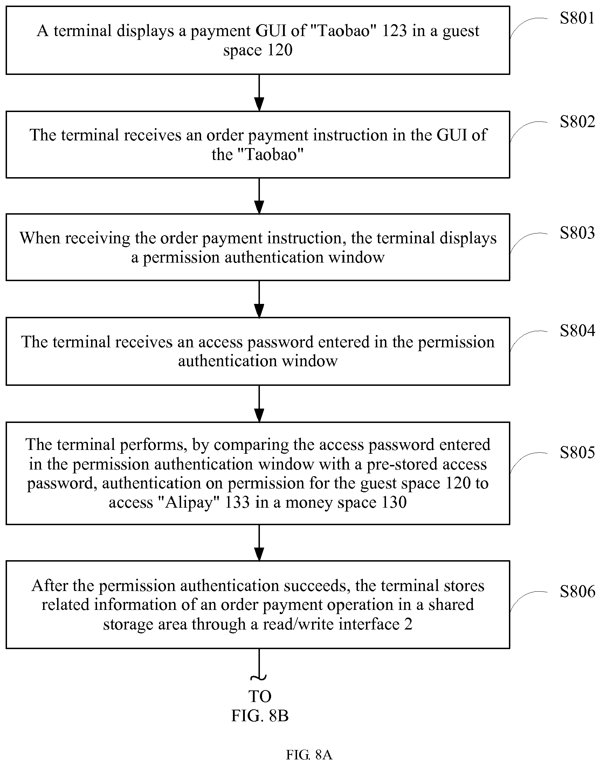

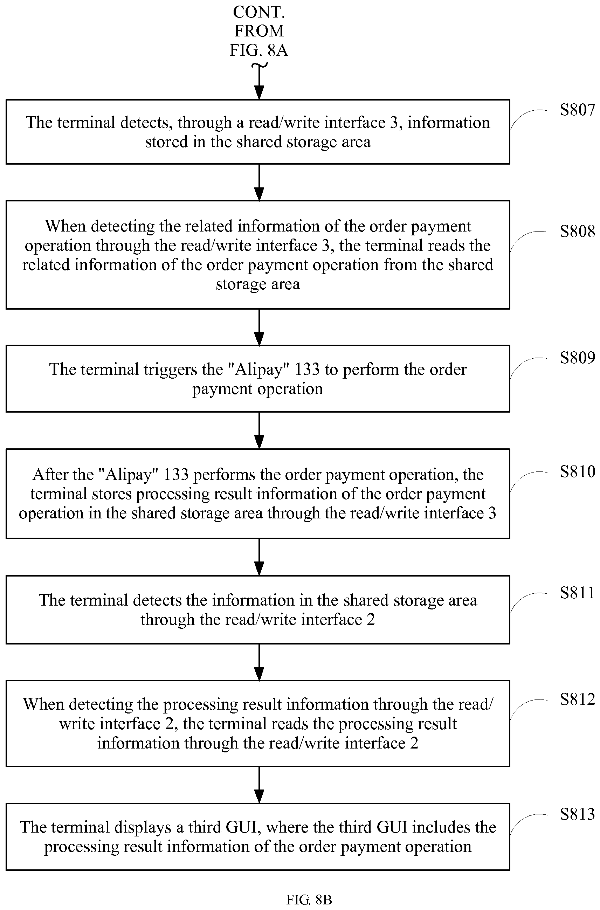

In the first application scenario, as shown in FIG. 8A and FIG. 8B, the method in this embodiment of the present invention may include S801 to S813.

S801. A terminal displays a payment GUI of "Taobao" 123 in a guest space 120.

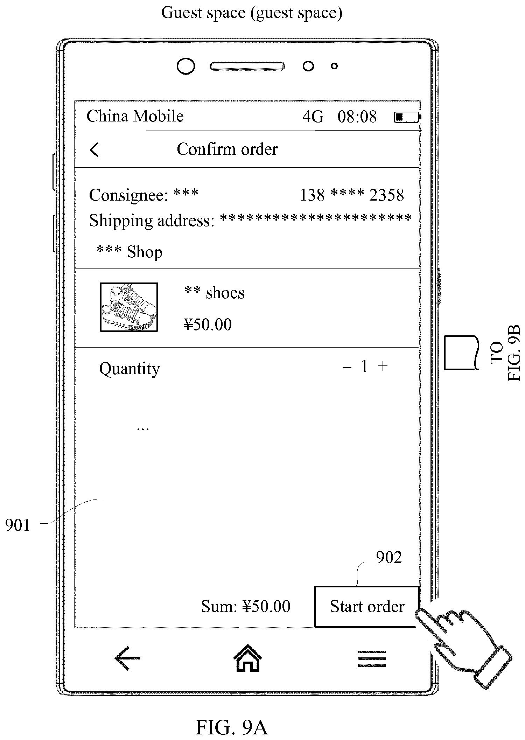

For example, it is assumed that the user purchases a pair of shoes in the "Taobao", and the terminal may display a payment GUI 901 of the "Taobao" shown in FIG. 9A. The GUI shown in FIG. 9A includes a "start order" option 902.

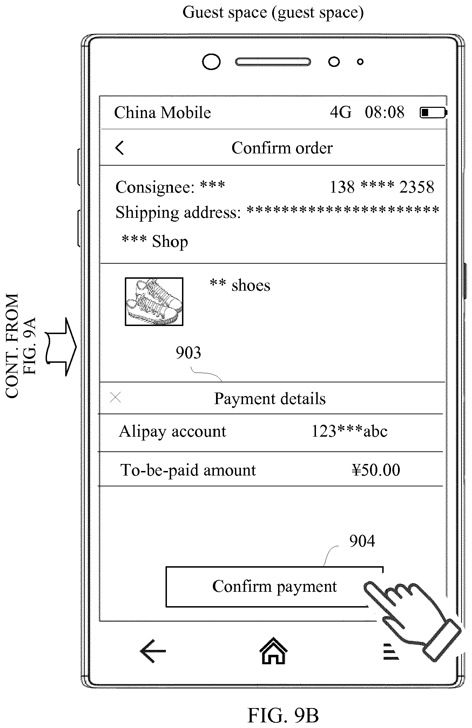

It is assumed that a default payment manner of the "Taobao" 123 in the guest space 120 of the terminal is payment by Alipay and an Alipay account bound to the "Taobao" 123 is a logged-in Alipay account "123***abc" in "Alipay" 133 in a money space 130. When a user finger taps the "start order" option 902 shown in FIG. 9A, the terminal may display a GUI 903 shown in FIG. 9B. The GUI 903 shown in FIG. 9B includes a "confirm payment" option 904.

S802. The terminal receives an order payment instruction in the GUI of the "Taobao".

For example, the order payment instruction (namely, the first instruction) may be an instruction triggered when a user taps the "confirm payment" option 904 in the GUI shown in FIG. 9B. The order payment instruction may be used to request the "Alipay" 133 in the money space 130 to perform an order payment operation in response to the order payment instruction.

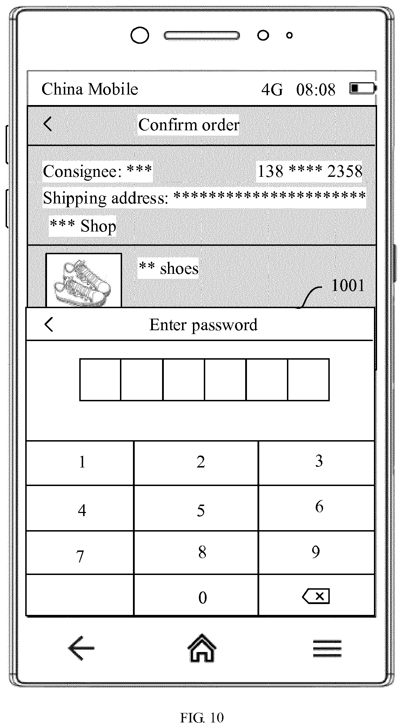

Generally, the "Taobao" and the "Alipay" are in one user space of the terminal. In this case, after the user finger taps the "confirm payment" option, the terminal may display a GUI shown in FIG. 10. The GUI shown in FIG. 10 may include a payment password input window 1001 of the "Alipay". After entering a correct payment password in the payment password input window 1001, the user may complete payment for the foregoing order.

However, in this embodiment of the present invention, because the "Taobao" 123 and the "Alipay" 133 are installed in different user spaces, after the user initiates the order payment instruction in the "Taobao" 123 in the guest space 120, the "Alipay" 133 in the money space 130 cannot directly perform the order payment operation in response to the order payment instruction. Instead, authentication is first performed on permission for the guest space 120 to access the "Alipay" 133 in the money space 130. Specifically, the method in this embodiment of the present invention may further include S803.

S803. When receiving the order payment instruction, the terminal displays a permission authentication window.

S804. The terminal receives an access password entered in the permission authentication window.

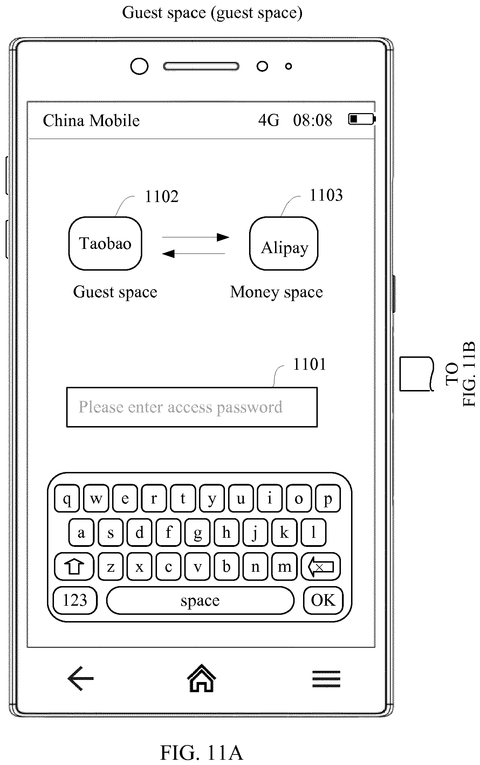

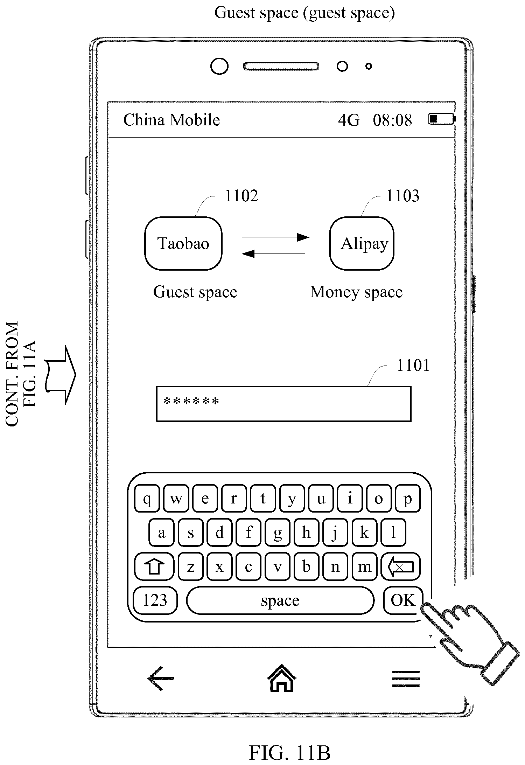

For example, after the user finger taps the "confirm payment" option 904 shown in FIG. 9B, the terminal may display a GUI shown in FIG. 11A. The GUI shown in FIG. 11A includes a "permission authentication window" 1101. The user may enter the access password in a "permission authentication window" 1101 shown in FIG. 11B. In addition, after the user enters the access password in the "permission authentication window" 1901 shown in FIG. 11B and taps an "OK" button shown in FIG. 11B, the terminal may receive the access password entered in the permission authentication window.

Further, the GUI shown in FIG. 11A may further include an icon 1102 of the application "Taobao" in the guest space 120 and an icon 1103 of the application "Alipay" in the money space 130.

The access password may be a password used by the guest space 120 to access the money space 130, or may be a login password for the "Alipay" 133 in the money space 130. Alternatively, the access password may be a payment password of the "Alipay" 133. This is not limited in this embodiment of the present invention.

S805. The terminal performs, by comparing the access password entered in the permission authentication window with a pre-stored access password, authentication on permission for the guest space 120 to access "Alipay" 133 in a money space 130.

When the access password entered in the permission authentication window is the same as the pre-stored access password, it indicates that the permission authentication succeeds; or when the access password entered in the permission authentication window is different from the pre-stored access password, it indicates that the permission authentication fails.

S806. After the permission authentication succeeds, the terminal stores related information of an order payment operation in a shared storage area through a read/write interface 2.

The related information of the order payment operation may include operation information of the order payment operation and data information required for the order payment operation. The operation information of the order payment operation may be instruction information for instructing the second application to perform the "order payment" operation, and the data information required for the order payment operation may be an order amount.

Optionally, the data information required for the order payment operation may further include at least one of an order type and information about a commodity corresponding to the order. This is not limited in this application. Order types may be online shopping, online utilities payment, and the like.

Further, the related information of the order payment operation may include a first identifier, such as an identifier of the money space 130 or an identifier of the Alipay in an identifier of the money space 130.

When the terminal is in the guest space 120, a storage area (namely, a second storage area) of the money space 130 cannot be directly accessed. However, after the permission authentication succeeds, the terminal may invoke the read/write interface 2 to store the related information of the order payment operation in the shared storage area. The read/write interface 2 may be a private interface.

S807. The terminal detects, through a read/write interface 3, information stored in the shared storage area.

For example, the terminal may invoke the read/write interface 3 to periodically detect the information stored in the shared storage area. The read/write interface 3 may be a private interface configured to support the money space 130 in reading/writing data in the shared storage area.

S808. When detecting the related information of the order payment operation through the read/write interface 3, the terminal reads the related information of the order payment operation from the shared storage area.

S809. The terminal triggers the "Alipay" 133 to perform the order payment operation.

After reading the related information of the order payment operation by invoking the read/write interface 3, the terminal may identify that the related information of the order payment operation includes the first identifier. Because the first identifier is the identifier of the money space 130 or the identifier of the "Alipay" 133, the terminal may determine that the first identifier is a related identifier of the money space 130, and may invoke the "Alipay" 133 to perform the order payment operation in response to the order payment instruction.

S810. After the "Alipay" 133 performs the order payment operation, the terminal stores processing result information of the order payment operation in the shared storage area through the read/write interface 3.

It may be understood that, the processing result information is data obtained after the "Alipay" 133 performs the order payment operation in response to the order payment instruction. Therefore, when writing the processing result information into the shared storage area through the read/write interface 3, the terminal may directly invoke the read/write interface of the shared storage area to write the processing result information of the order payment operation into the shared storage area without performing permission authentication.

Further, the processing result information may include a second identifier, and the second identifier may be an identifier of the guest space 120, or may be an identifier of the "Taobao" 123.

Certainly, to ensure privacy of each user space, authentication may alternatively be performed, in the guest space 120, on permission for the money space 130 to access the guest space 120. For a method for performing authentication on permission for the money space 130 to access the guest space 120, refer to the foregoing method for performing permission authentication in this embodiment of the present invention. Details are not described herein again in this embodiment of the present invention.

S811. The terminal detects the information in the shared storage area through the read/write interface 2.

S812. When detecting the processing result information through the read/write interface 2, the terminal reads the processing result information through the read/write interface 2.

S813. The terminal displays a third GUI, where the third GUI includes the processing result information of the order payment operation.

In a first implementation of this embodiment of the present invention, the pre-stored access password may be any one of a password used by the guest space 120 to access the money space 130, the login password of the "Alipay" 133, an unlocking password of the money space 130 in a lock screen state, and the like. As shown in FIG. 11B, after the user enters the access password in the permission authentication window 1101 and performs confirmation (for example, the user taps the "OK" button shown in FIG. 11B), the terminal may be triggered to perform S806 to S809.

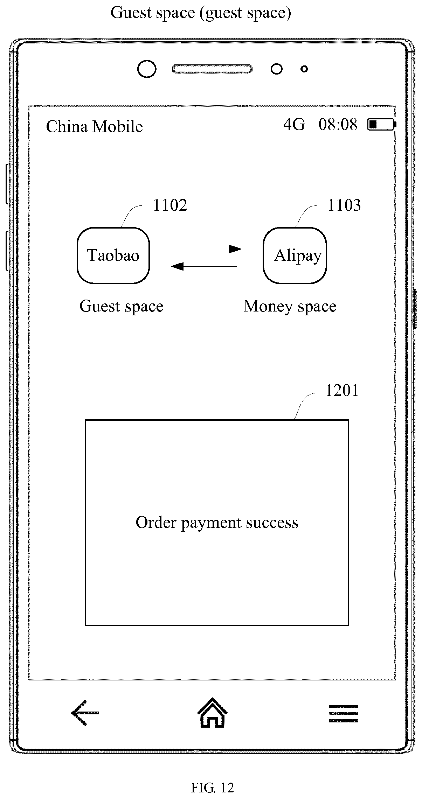

In the first implementation, if configuration information of the "Alipay" 133 in the money space 130 indicates that the "Alipay" 133 may allow password-free payment, in other words, an order payment operation may be performed without a need to enter the payment password of the "Alipay" 133, after the user enters the access password in the permission authentication window 1101 shown in FIG. 11B and taps the "OK" button shown in FIG. 11B, the terminal may perform S806 to S808, and S809. After performing S806 to S812, the terminal displays the third GUI shown in FIG. 12. The third GUI shown in FIG. 12 includes a prompt window 1201 of "order payment success".

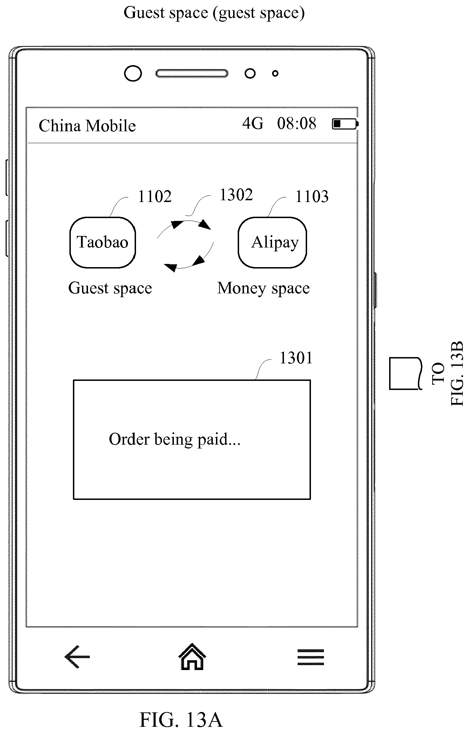

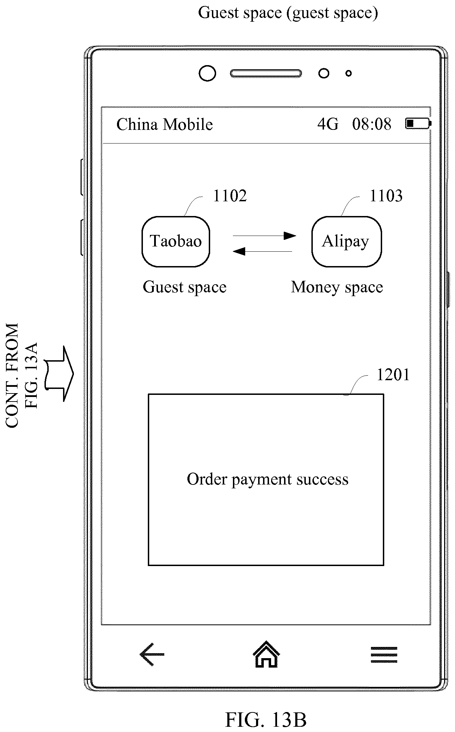

Optionally, to embody an interaction process (namely, a process of performing S806 to S811) of the guest space 120 and the money space 130 in a display interface of the terminal, after the user enters the access password in the permission authentication window 1101 shown in FIG. 11B and taps the "OK" button shown in FIG. 11B, in a process of performing S806 to S812, the terminal may display a GUI shown in FIG. 13A. The GUI shown in FIG. 13A includes an "order being paid..." prompt window 1301 and a "dynamic payment icon" 1302. An arrow in the "dynamic payment icon" 1302 may dynamically move along a direction of the arrow to indicate that the guest space 120 and the money space 130 are exchanging information, thereby completing order payment of the "Taobao" 123 in the guest space 120 by using the "Alipay" 133 in the money space 130. When performing S811, the terminal reads, from the shared storage area, the processing result information that includes the second identifier, and the processing result information indicates that the order is successfully paid, the terminal may display a third GUI shown in FIG. 13B. The third GUI shown in FIG. 13B includes a prompt window 1201 of "order payment success".

In a second implementation of this embodiment of the present invention, the pre-stored access password corresponding to the first identifier may be the login password of the "Alipay" 133. As shown in FIG. 11B, after the user enters the access password in the permission authentication window 1101 and performs confirmation (for example, the user taps the "OK" button shown in FIG. 11B), the terminal may be triggered to perform S806 to S809.

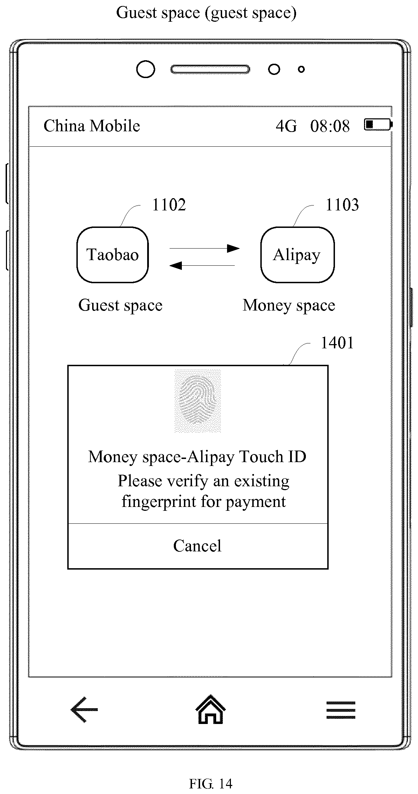

In the second implementation, if configuration information of the "Alipay" 133 in the money space 130 indicates that the "Alipay" 133 does not allow password-free payment, in other words, an order payment operation can be performed only after the correct payment password of the "Alipay" 133 is entered, after the user enters the access password in the permission authentication window 1101 shown in FIG. 11B and taps the "OK" button shown in FIG. 11B, the terminal may display a GUI shown in FIG. 14. As shown in FIG. 14, fingerprint payment is used as an example. The GUI displayed by the terminal includes a payment password input window 1401. After the terminal receives fingerprint information entered by the user and fingerprint verification succeeds, the terminal may display the GUI shown in FIG. 12. Alternatively, during the order payment operation performed by the "Alipay" 133, the terminal may display the GUI shown in FIG. 13A. When the terminal reads, from the shared storage area, the processing result information that includes the second identifier and the processing result information indicates that order payment succeeds, the terminal may display the third GUI shown in FIG. 13B.

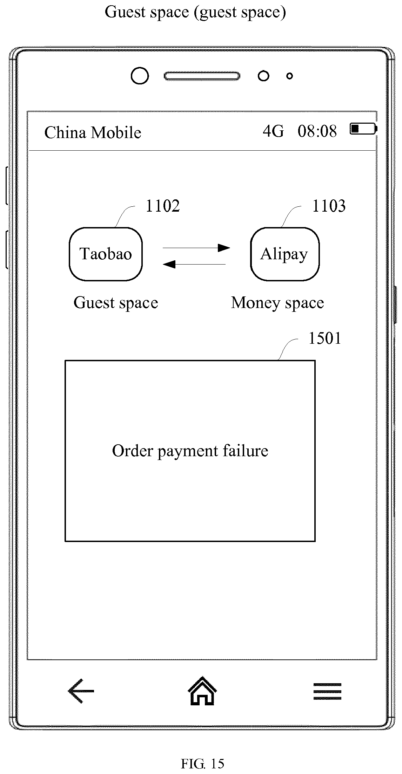

When verification performed on the fingerprint information entered by the user fails or order payment fails because a sudden fault (for example, a network fault), the terminal may display a GUI shown in FIG. 15. The GUI shown in FIG. 15 includes prompt information 1501 of "order payment failure".

In the information exchange method provided in this embodiment of the present invention, the terminal may write, into the shared storage area through the read/write interface 2, the related information of the order payment operation that the "Taobao" 123 in the guest space 120 is to trigger the "Alipay" 133 in the money space 130 to perform, to exchange information between the guest space 120 and the shared storage area. In addition, the terminal may read the related information of the order payment operation from the shared storage area through the read/write interface 3 of the money space 130, to exchange information between the shared storage area and the money space 130. In addition, when the terminal reads the related information of the order payment operation through the read/write interface 3 of the money space 130, the terminal triggers the "Alipay" 133 in the money space 130 to perform the order payment operation. Therefore, information may be exchanged between the guest space 120 and the money space 130 by using the shared storage area, and order payment of the "Taobao" 123 in the guest space 120 is completed by using the "Alipay" 133 in the money space 130.

In a second application scenario, after receiving, in the "WeChat" 112 in the Artem space 110, a photo sent from another WeChat account, the user initiates a picture storage instruction for the "photos" 122 in the guest space 120, to trigger the "photos" 122 in the guest space 120 to store the photo.

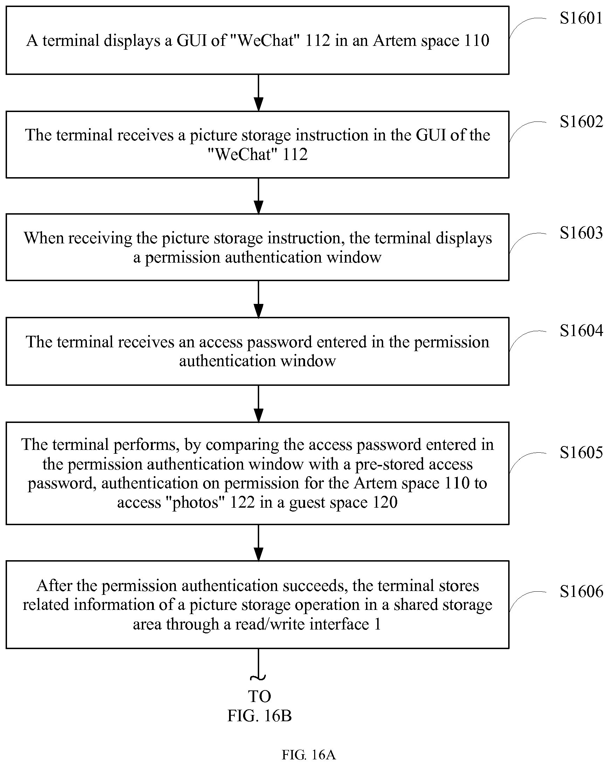

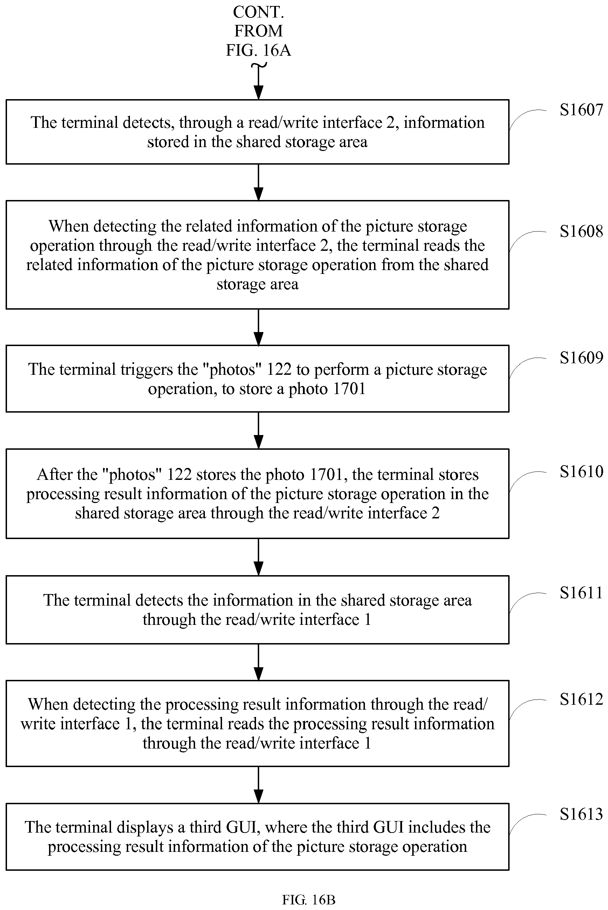

In the second application scenario, as shown in FIG. 16A and FIG. 16B, the method in this embodiment of the present invention may include S1601 to S1613.

S1601. A terminal displays a GUI of "WeChat" 112 in an Artem space 110.

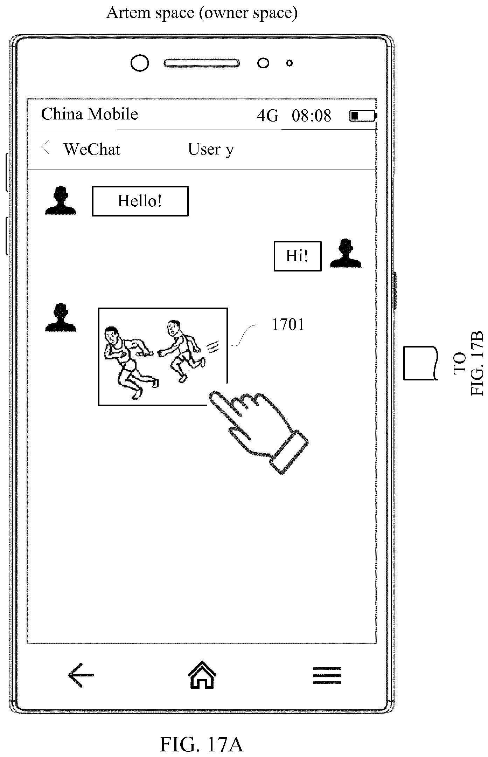

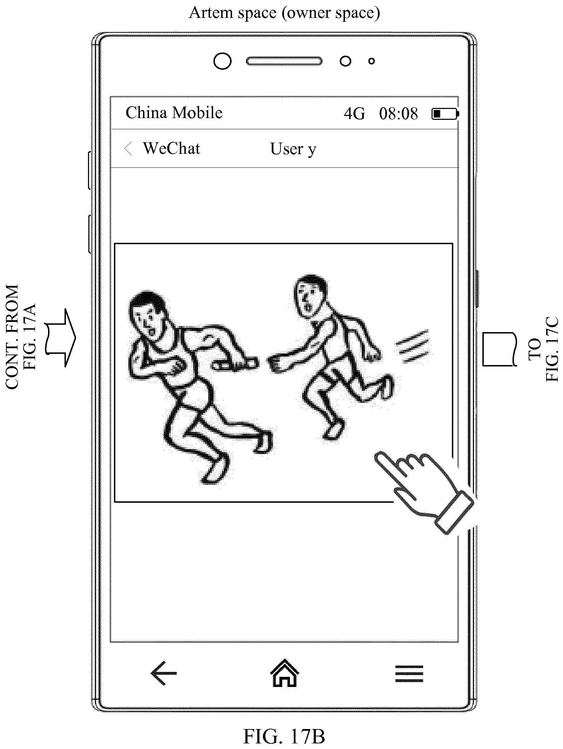

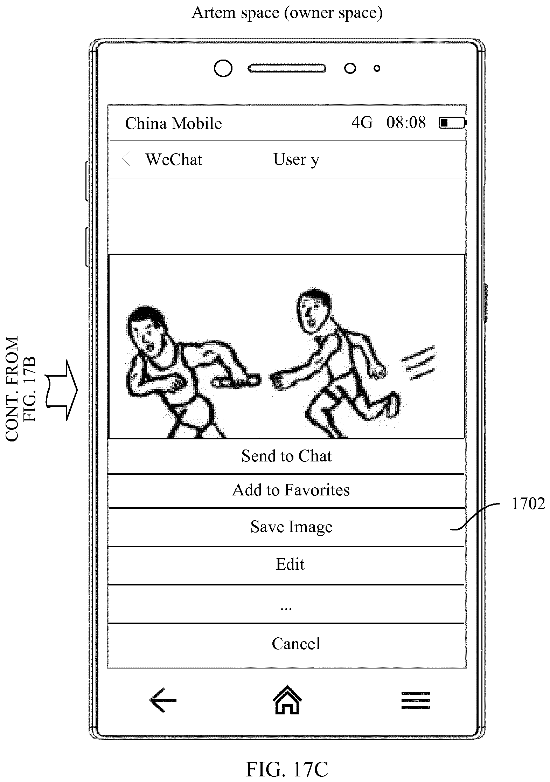

For example, it is assumed that a user Artem is chatting with another user (for example, a user y) by using the "WeChat" 112 in the Artem space 110, the user y sends, to the user Artem, a photo (a photo 1701) illustrating that the user Artem was participating in a relay race. The terminal may display a GUI of the "WeChat" 112 shown in FIG. 17A. When a user finger taps the photo 1701 shown in FIG. 17A, the terminal may display a GUI shown in FIG. 17B. When the user touches and holds the photo in the GUI shown in FIG. 17B, the terminal may display a GUI shown in FIG. 17C. The GUI shown in FIG. 17C includes a "save image" option 1702.

S1602. The terminal receives a picture storage instruction in the GUI of the "WeChat" 112.

For example, the picture storage instruction (namely, the first instruction) may be an instruction triggered when the user taps the "save image" option 1702 in the GUI shown in FIG. 17C. The picture storage instruction may be used to request "photos" 122 in a guest space 120 to store the picture 1701 in response to the picture storage instruction. In other words, the "photos" 122 in the guest space 120 performs a picture storage operation.

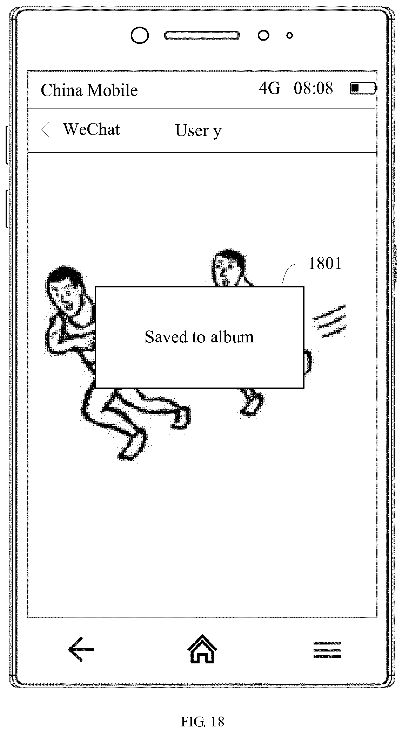

Generally, the "WeChat" and the system application "photos" are in one user space of the terminal. In this case, after the user finger taps the "save image" option, the terminal may display a GUI shown in FIG. 18. The GUI shown in FIG. 18 may include a prompt window 1801 of" saved to album".

However, in this embodiment of the present invention, because the "WeChat" 112 and the "photos" 122 are installed in different user spaces, after the user initiates the picture storage instruction in the "WeChat" 112 in the Artem space 110, the "photos" 122 in the guest space 120 cannot directly perform the picture storage operation in response to the picture storage instruction. Instead, authentication is first performed on permission for the Artem space 110 to access the "photos" 122 in the guest space 120. Specifically, the method in this embodiment of the present invention may further include S1603.

S1603. When receiving the picture storage instruction, the terminal displays a permission authentication window.

S1604. The terminal receives an access password entered in the permission authentication window.

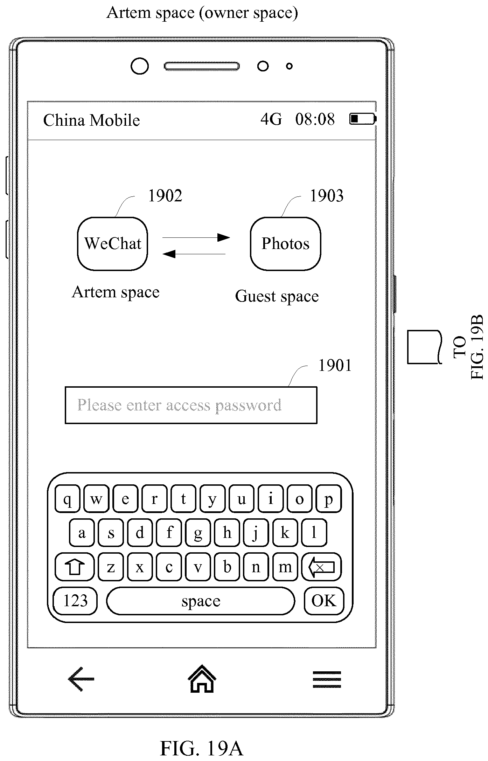

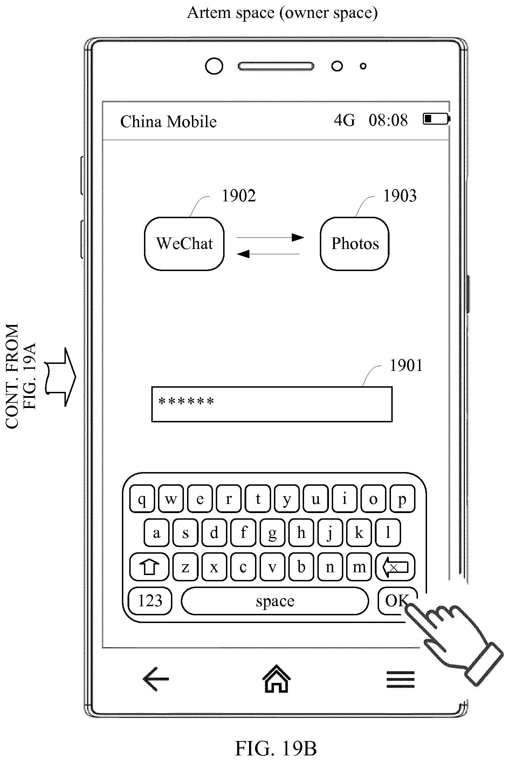

For example, after the user finger taps the "save image" option 1702 shown in FIG. 17C, the terminal may display a GUI shown in FIG. 19A. The GUI shown in FIG. 19A includes a "permission authentication window" 1901. The user may enter the access password in a "permission authentication window" 1901 shown in FIG. 19B. In addition, after the user enters the access password in the "permission authentication window" 1901 shown in FIG. 19B and taps an "OK" button shown in FIG. 19B, the terminal may receive the access password entered in the permission authentication window.

Further, the GUI shown in FIG. 19A may further include an icon 1902 of the application "WeChat" in the Artem space 110 and an icon 1903 of the application "photos" in the guest space 120.

The access password may be a password used by the Artem space 110 to access the guest space 120, or may be an unlocking password of the guest space 120 in a lock screen state. This is not limited in this embodiment of the present invention.

S1605. The terminal performs, by comparing the access password entered in the permission authentication window with a pre-stored access password, authentication on permission for the Artem space 110 to access "photos" 122 in a guest space 120.

When the access password entered in the permission authentication window is the same as the pre-stored access password, it indicates that the permission authentication succeeds; or when the access password entered in the permission authentication window is different from the pre-stored access password, it indicates that the permission authentication fails.

S1606. After the permission authentication succeeds, the terminal stores related information of a picture storage operation in a shared storage area through a read/write interface 1.

In the second application scenario, the related information of the picture storage operation may include operation information of the picture storage operation and data information required for the picture storage operation. The operation information of the picture storage operation may be instruction information for instructing the second application to perform the "picture storage" operation, and the data information required for the picture storage operation may be a to-be-stored picture, for example, the photo 1701.

Further, the related information of the picture storage operation may include a first identifier, such as an identifier of the guest space 120 or an identifier of the system application "photos" 122 in an identifier of the guest space 120.

When the terminal is in the Artem space 110, a storage area (namely, a second storage area) of the guest space 120 cannot be directly accessed. However, after the permission authentication succeeds, the terminal may invoke the read/write interface 1 to store the related information of the picture storage operation in the shared storage area. The read/write interface 1 may be a private interface.

S1607. The terminal detects, through a read/write interface 2, information stored in the shared storage area.

For example, the terminal may invoke the read/write interface 2 to periodically detect the information stored in the shared storage area. The read/write interface 2 may be a private interface configured to support the guest space 120 in reading/writing data in the shared storage area.

S1608. When detecting the related information of the picture storage operation through the read/write interface 2, the terminal reads the related information of the picture storage operation from the shared storage area.

S1609. The terminal triggers the "photos" 122 to perform a picture storage operation, to store a photo 1701.

After reading the related information (for example, the photo 1701 and the first identifier) of the picture storage operation by invoking the read/write interface 2, the terminal may identify that the related information of the picture storage operation includes the first identifier. The first identifier is the identifier of the guest space 120 or the identifier of the system application "photos" 122 in the guest space 120, and therefore, the terminal may determine that the first identifier is a related identifier of the guest space 120, and can invoke the "photos" 122 to store the picture 1701 in response to the picture storage instruction.

S1610. After the "photos" 122 stores the photo 1701, the terminal stores processing result information of the picture storage operation in the shared storage area through the read/write interface 2.

The processing result information is data obtained after the "photos" 122 performs the picture storage operation in response to the picture storage instruction. Therefore, when writing the processing result information into the shared storage area through the read/write interface 2, the terminal may directly invoke the read/write interface of the shared storage area to write the processing result information of the picture storage operation into the shared storage area without performing permission authentication. The processing result information may include a second identifier, and the second identifier may be an identifier of the Artem space 110, or may be an identifier of the "WeChat" 112.

Certainly, to ensure privacy of each user space, authentication may alternatively be performed, in the guest space 120, on permission for the Artem space 110 to access the guest space 120. For a method for performing authentication on permission for the "Artem" space 110 to access the guest space 120, refer to the foregoing method for performing permission authentication in this embodiment of the present invention. Details are not described herein again in this embodiment of the present invention.

S1611. The terminal detects the information in the shared storage area through the read/write interface 1.

S1612. When detecting the processing result information through the read/write interface 1, the terminal reads the processing result information through the read/write interface 1.

S1613. The terminal displays a third GUI, where the third GUI includes the processing result information of the picture storage operation.

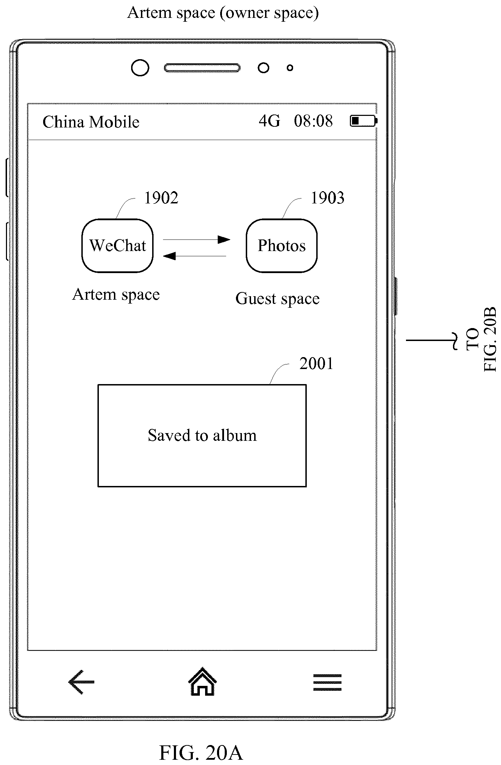

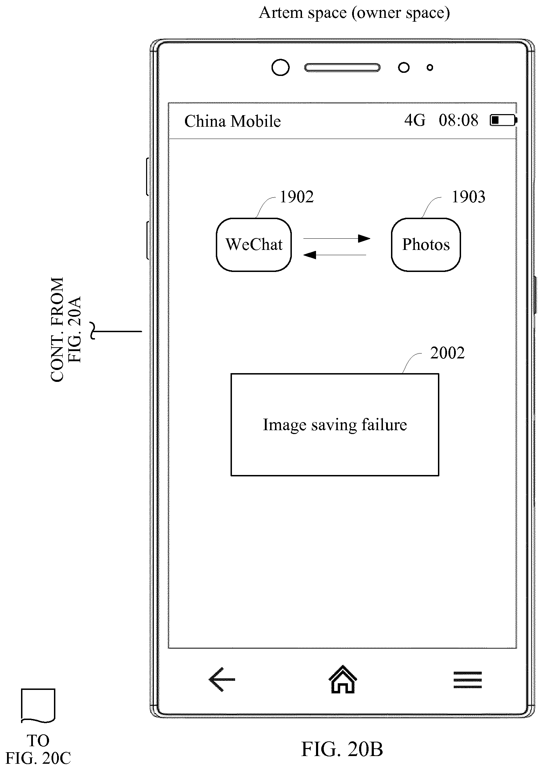

For example, if the processing result information of the picture storage operation indicates that the photo 1702 is stored in the system photo album "photos" 122 in the guest space 120, the terminal may display a GUI shown in FIG. 20A. The GUI shown in FIG. 20A may include a prompt window 2001 of "saved to album". If the processing result information of the picture storage operation indicates that the photo 1702 fails to be stored, the terminal may display a GUI shown in FIG. 20B. The GUI shown in FIG. 20B may include a prompt window 2002 of "image saving failure".

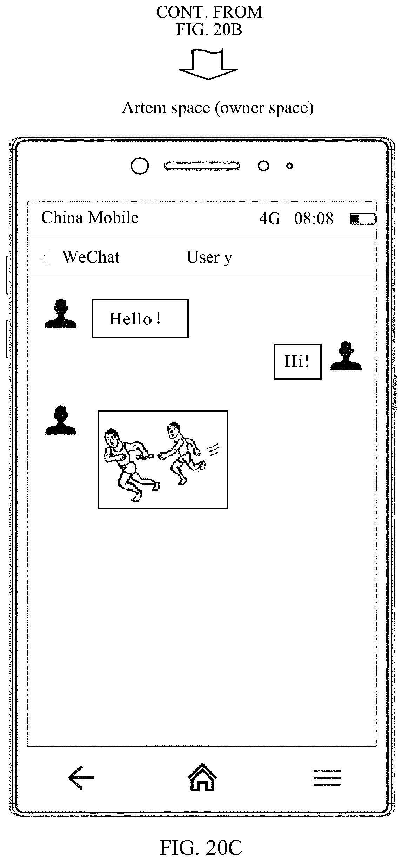

Further, regardless of whether the photo 1702 is successfully stored in the system photo album "photos" 122 in the guest space 120, after displaying the GUI shown in FIG. 20A or the GUI shown in FIG. 20B for a specific time (for example, 5 seconds), the terminal may return to a chat interface of the "WeChat" 112 in the Artem space 110, and in other words, a GUI shown in FIG. 20C is displayed.

In the information exchange method provided in this embodiment of the present invention, the terminal may write, into the shared storage area through the read/write interface 1, the related information of the picture storage operation that the "WeChat" 123 in the Artem space 110 is to trigger the "photos" 122 in the guest space 120 to perform, to exchange information between the Artem space 110 and the shared storage area. In addition, the terminal may read the related information of the picture storage operation from the shared storage area through the read/write interface 2 of the guest space 120, to exchange information between the shared storage area and the guest space 120. In addition, when the terminal reads the related information of the picture storage operation through the read/write interface 2 of the guest space 120, the terminal triggers the "photos" 122 in the guest space 120 to store the photo 1702. In this way, information may be exchanged between the Artem space 110 and the guest space 120 by using the shared storage area, and the photo 1702 is stored in the "photos" 122 in the guest space 120.

The information exchange method provided in this embodiment of the present invention may be applied to not only the foregoing two listed application scenarios but also a third application scenario (for example, when a user posts a photo in moments by using a moment share function of the "WeChat" 132 in the money space 130, a photo reading instruction is initiated for the "photos" 122 in the guest space 120, to trigger the "photos" 122 in the guest space 120 to provide, for the "WeChat" 132 in the money space 130, a photo that is available for post). Other application scenarios of the information exchange method are not described in detail herein in this embodiment of the present invention.

An embodiment of the present invention further provides an information exchange method.

A terminal sends a first request message to a second application in a second user space by using a first application in a first user space, where the first request message is used to request to exchange information with the second user space and the first request message includes related information of the second user space.

Specifically, the first request message may be used to request the second application to perform a first operation in response to the first request message (similar to the first instruction). The related information of the second user space may include related information of the first operation and a password of the second user space (or a user name and/or a password of the second application).

For example, a method in which the terminal sends the first request message to the second application in the second user space by using the first application in the first user space may include: sending, by the terminal, the first request message in a broadcast manner by using the first application in the first user space, where the first request message includes an identifier of the second user space or an identifier of the second application. Because the first request message includes the identifier of the second user space or the identifier of the second application, the terminal may determine that the first request message is a request message specific to the second user space, and the terminal may trigger a corresponding application (for example, the second application) in the second user space to respond to the first request message.

For example, it is assumed that the first application is "QQ" 111 in an Artem space 110 (namely, the first user space), and the second application is "photos" 122 in a guest space 120 (namely, the second user space). The first request message may be an instruction used to request to obtain a photo from the "photos" 122 in the guest space 120 to transmit the photo to a friend of a user in the "QQ" 111, and the first operation may be an operation of reading a photo x from the "photos" 122 and transmitting the photo x to the "QQ" 111. The related information of the second user space may include an identifier of the photo x and a password of the guest space 120 (or a password of the system application "photos" 122 in the guest space 120).

The terminal verifies the related information of the second user space, and after verification succeeds, the terminal responds to the first request message by using the second application in the second user space and exchanges information with the first user space.

The terminal may verify a password of the second user space or a password of the second application. After verification succeeds, the terminal may trigger the second application to respond to the first request message, to exchange information between the second user space and the first user space.

Optionally, a third user space may be further configured in the terminal in this embodiment of the present invention. When the terminal is in the first user space or the second user space, the terminal may access a storage area of the third user space (for example, the shared storage area). The terminal may verify the related information of the second user in the third user space.

The storage area of the third user space is located in a storage medium different from a storage medium in which storage areas of the first user space and the second user space are located. For example, the storage areas of the first user space and the second user space may be a hard disk of the terminal, and the storage area of the third user space may be an external secure digital card.

Further, after the second application performs the first operation in response to the first request message, the terminal may further return processing result information of the first operation to the first user space, to exchange information between the second user space and the first user space.

Specifically, the terminal may further send a second request message to the second user space in the third user space. The second request message is used to request to transmit processing result information of the first request message to the first user space by using the third user space. The second request message may include related information of the second user.

In the information exchange method provided in this embodiment of the present invention, when receiving, in the first user space, the first request message for accessing the second application in the second user space, the terminal may verify the related information of the second user space, and after verification succeeds, the terminal triggers the second application to perform the first operation in response to the first request message. In other words, in the solution provided in this embodiment of the present invention, information can be exchanged between the first user space and the second user space.

The foregoing mainly describes the solutions provided in the embodiments of this application from a perspective of information exchange between the first user space and the second user space of the terminal. It may be understood that, to implement the foregoing functions, the terminal includes corresponding function modules for performing the functions. A person of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The terminal provided in the embodiments of this application is configured to implement the foregoing method embodiments. Specifically, the terminal may be divided based on the foregoing method examples. For example, modules or units may be obtained through division for the functions, or two or more functions may be integrated into one processing module. The foregoing integrated module may be implemented in a form of hardware, or may be implemented in a form of a software module or unit. Division performed to obtain the modules or units in the embodiments of this application is an example, and is merely logical function division. During actual implementation, another division manner may be used.

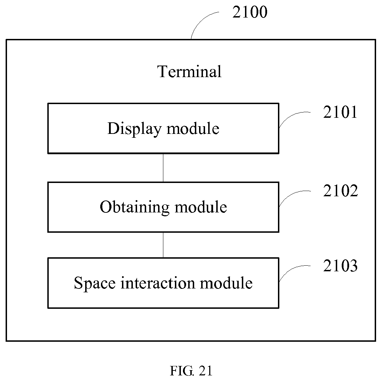

FIG. 21 is a possible schematic structural diagram of a terminal in the foregoing embodiments. As shown in FIG. 20A to FIG. 20C, a terminal 2100 may include a display module 2101, an obtaining module 2102, and a space interaction module 2103.

The display module 2101 is configured to support the operation of "receiving the second instruction" in S901, S1102, S1103, and S1503 in the method embodiments, and/or is configured to support another process of the technology described in this specification.

The obtaining module 2102 is configured to support the method embodiments, and/or is configured to support another process of the technology described in this specification.

The space interaction module 2103 is configured to support the method embodiments, and/or is configured to support another process of the technology described in this specification.

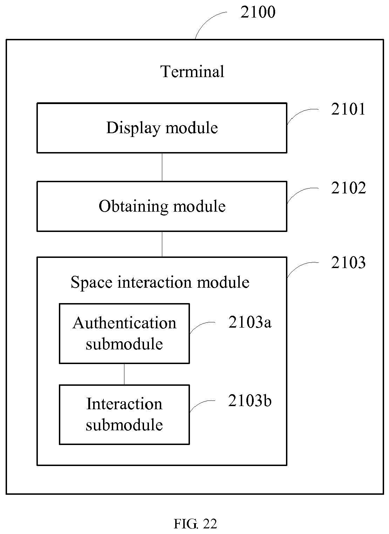

Further, as shown in FIG. 22, the space interaction module 2103 may include an authentication submodule 2103a and an interaction submodule 2103b. The authentication submodule 2103a is configured to support the authentication operation in the method embodiments, and/or is configured to support another process of the technology described in this specification. The interaction submodule 2103b is configured to support the interaction operation in the method embodiments, and/or is configured to support another process of the technology described in this specification.

Further, the terminal 2100 may further include a storage module. The storage module may include a first storage area, a second storage area, and a shared storage area. The first storage area is corresponding to a first user space, and the second storage area is corresponding to a second user space.

Certainly, the terminal 2100 includes but is not limited to the foregoing listed units and modules. For example, the terminal 2100 may further include a receiving module configured to receive data or a signal sent by another device, a sending module configured to send data or a signal to another device, and the like. In addition, functions that can be specifically implemented by the modules include but are not limited to functions corresponding to the method steps in the examples. For another unit of the terminal 2100 and a detailed description of each unit of the terminal 2100, refer to a detailed description of a method step corresponding to the unit. Details are not described herein again in this embodiment of this application.

When an integrated unit is used, the obtaining module 2102, the space interaction module 2103, and the like may be integrated in one processing unit for implementation. The processing unit may be a processor or a controller, for example, may be a CPU, a general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The processing unit can implement or execute various illustrative logical blocks, modules, and circuits described with reference to the content disclosed in this application. Alternatively, the processing unit may be a combination of computing functions, for example, a combination of one or more microprocessors, or a combination of the DSP and a microprocessor. The storage module may be a memory. The display module 2101 may be a display.

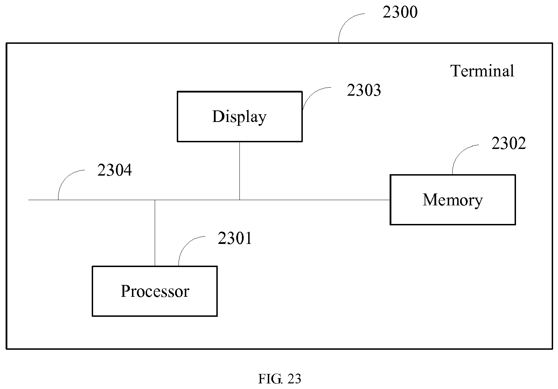

When the processing unit is a processor, the storage module is a memory, and the display module is a display, the terminal 2300 in this embodiment of this application may be a terminal 2300 shown in FIG. 23. As shown in FIG. 23, the terminal 2300 includes a processor 2301, a memory 2302, and a display 2303. The processor 2301, the memory 2302, and the display 2303 are connected to each other by using a bus 2304.

The memory 2302 is configured to store computer program code, the computer program code includes an instruction, and when the processor 2301 of the terminal 2300 executes the instruction, the terminal 2300 performs related method steps in any one of FIG. 4, FIG. 5, FIG. 7A and FIG. 7B, FIG. 8A and FIG. 8B, and FIG. 16A and FIG. 16B to implement the information exchange method in the foregoing embodiments. The memory 2302 includes a first storage area, a second storage area, and a shared storage area. The first storage area is corresponding to the first user space of the terminal, and the second storage area is corresponding to the second user space of the terminal.

The bus 2304 may be a peripheral component interconnect (Peripheral Component Interconnect, PCI) bus or an extended industry standard architecture (Extended Industry Standard Architecture, EISA) bus or the like. The bus 2304 may be classified into an address bus, a data bus, a control bus, and the like. For ease of representation, only one thick line is used to represent the bus in FIG. 23, but this does not mean that there is only one bus or only one type of bus.

This application further provides a computer storage medium. The computer storage medium stores computer program code, and when the processor 2301 of the terminal 2300 executes the computer program code, the terminal 2300 performs related method steps in any one of FIG. 4, FIG. 5, FIG. 7A and FIG. 7B, FIG. 8A and FIG. 8B, and FIG. 16A and FIG. 16B to implement the information exchange method in the foregoing embodiments.

An embodiment of the present invention further provides a computer program product. When the computer program product runs on a computer, the computer performs related method steps in any one of FIG. 4, FIG. 5, FIG. 7A and FIG. 7B, FIG. 8A and FIG. 8B, and FIG. 16A and FIG. 16B to implement the information exchange method in the foregoing embodiments.

The terminal 2100, the terminal 2300, the computer storage medium, or the computer program product provided in the embodiments of the present invention is configured to perform a corresponding method provided above. Therefore, for beneficial effects that can be achieved by the terminal 2100, the terminal 2300, the computer storage medium, or the computer program product, refer to beneficial effects in a corresponding method provided above. Details are not described herein again.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of the claims.

## Claims

1. An information exchange method, applied to a terminal, wherein the terminal comprises a first user space and a second user space, the first user space and the second user space are independent of each other,
wherein that the first user space and the second user space are independent of each other means that a storage area in the terminal corresponding to the first user space and a storage area in the terminal corresponding to the second user space are independent of each other, and when the terminal operates in the first user space, the terminal cannot access or operate data stored in the storage area corresponding to the second user space, and when the terminal operates in the second user space, the terminal cannot access or operate data stored in the storage area corresponding to the first user space,
wherein the method comprises the steps of:
• displaying a first graphical user interface, GUI, wherein the first GUI is a display interface of a first application in the first user space (S 401);
• receiving a first instruction in the first GUI, wherein the first instruction is used to request a second application to perform a first operation in response to the first instruction, and the second application is an application in the second user space (S 402); and
• transmitting, to the second user space after the first instruction is received, related information of the first operation by using a shared storage area in the terminal, to trigger the second application to perform the first operation in response to the first instruction (S 404),
wherein the step of the transmitting, to the second user space after the first instruction is received, the related information of the first operation by using the shared storage area in the terminal, to trigger the second application to perform the first operation in response to the first instruction comprises the steps of:
∘ writing, into the shared storage area after the first instruction is received, the related information of the first operation through a first interface, wherein the first interface is configured to support an application in the first user space in reading data from and writing data into the shared storage area;
∘ detecting, through a second interface, information stored in the shared storage area, wherein the second interface is configured to support an application in the second user space in reading data from and writing data into the shared storage area; and
∘ when the related information of the first operation is detected through the second interface, reading the related information of the first operation from the shared storage area, to trigger the second application to perform the first operation in response to the first instruction based on the related information of the first operation.

2. The method according to claim 1, wherein the step of performing, after the first instruction is received, authentication on permission for the first user space to access the second application in the second user space comprises the steps of:
displaying a second GUI after the first instruction is received, wherein the second GUI comprises a permission authentication window;
receiving an access password entered by a user in the permission authentication window; and
performing, based on the access password, authentication on the permission for the first user space to access the second application.

3. The method according to any one of claims 1 to 2, wherein after the step of transmitting, to the second user space after the first instruction is received, related information of the first operation by using the shared storage area in the terminal, to trigger the second application to perform the first operation in response to the first instruction, the method further comprises the steps of:
displaying a third GUI of the first application, wherein the third GUI comprises processing result information of the first operation performed by the second application.

4. A terminal, wherein the terminal comprises a first user space and a second user space, the first user space and the second user space are independent of each other, wherein that the first user space and the second user space are independent of each other means that a storage area in the terminal corresponding to the first user space and a storage area in the terminal corresponding to the second user space are independent of each other, and when the terminal operates in the first user space, the terminal cannot access or operate data stored in the storage area corresponding to the second user space, and when the terminal operates in the second user space, the terminal cannot access or operate data stored in the storage area corresponding to the first user space,
and the terminal comprises:
• a display module (2101), configured to display a first graphical user interface, GUI, wherein the first GUI is a display interface of a first application in the first user space;
• an obtaining module (2102), configured to receive a first instruction in the first GUI, wherein the first instruction is used to request a second application to perform a first operation in response to the first instruction, and the second application is an application in the second user space; and
• a space interaction module (2103), configured to transmit, to the second user space after the obtaining module receives the first instruction, related information of the first operation by using a shared storage area in the terminal, to trigger the second application to perform the first operation in response to the first instruction,
wherein the space interaction module (2103) is specifically configured to:
∘ write, into the shared storage area after the obtaining module receives the first instruction, the related information of the first operation through a first interface, wherein the first interface is configured to support an application in the first user space in reading data from and writing data into the shared storage area;
∘ detect, through a second interface, information stored in the shared storage area, wherein the second interface is configured to support an application in the second user space in reading data from and writing data into the shared storage area; and
∘ when the related information of the first operation is detected through the second interface, read the related information of the first operation from the shared storage area, to trigger the second application to perform the first operation in response to the first instruction based on the related information of the first operation.

5. The terminal according to claim 4, wherein the display module is further configured to display a second GUI after the obtaining module receives the first instruction, wherein the second GUI comprises a permission authentication window;
the obtaining module is further configured to receive an access password entered by a user in the permission authentication window; and
the authentication submodule is specifically configured to perform, based on the access password received by the obtaining module, authentication on the permission for the first user space to access the second application.

6. The terminal according to any one of claims 4 to 5, wherein the display module is further configured to display a third GUI of the first application after the space interaction module triggers the second application to perform the first operation in response to the first instruction, wherein the third GUI comprises processing result information of the first operation performed by the second application.

7. A computer storage medium, comprising a computer instruction, wherein a terminal performs the information exchange method according to any one of claims 1 to 3 when the computer instruction runs on the terminal.

8. A computer program product, wherein a computer performs the information exchange method according to any one of claims 1 to 3 when the computer program product runs on the computer.

## Patentansprüche

1. Informationsaustauschverfahren, angewendet auf ein Endgerät, wobei das Endgerät einen ersten Benutzerbereich und einen zweiten Benutzerbereich umfasst, wobei der erste Benutzerbereich und der zweite Benutzerbereich unabhängig voneinander sind, wobei die Tatsache, dass der erste Benutzerbereich und der zweite Benutzerbereich voneinander unabhängig sind, bedeutet, dass ein Speicherbereich in dem Endgerät, der dem ersten Benutzerbereich entspricht, und ein Speicherbereich in dem Endgerät, der dem zweiten Benutzerbereich entspricht, unabhängig voneinander sind, und wenn das Endgerät in dem ersten Benutzerbereich betrieben wird, das Endgerät nicht auf Daten zugreifen kann oder diese verwenden kann, die in dem Speicherbereich gespeichert sind, der dem zweiten Benutzerbereich entspricht, und wenn das Endgerät in dem zweiten Benutzerbereich betrieben wird, das Endgerät nicht auf Daten zugreifen kann oder diese verwenden kann, die in dem Speicherbereich gespeichert sind, der dem ersten Benutzerbereich entspricht, wobei die Verfahren die folgenden Schritte umfasst:
• Anzeigen einer ersten grafischen Benutzerschnittstelle (GUI), wobei die erste GUI eine Anzeigeschnittstelle einer ersten Anwendung im ersten Benutzerbereich ist (S 401);
• Empfangen eines ersten Befehls in der ersten GUI, wobei der erste Befehl verwendet wird, um eine zweite Anwendung anzufordern, eine erste Operation als Antwort auf den ersten Befehl auszuführen, und die zweite Anwendung eine Anwendung im zweiten Benutzerbereich ist (S 402); und
• Senden, an den zweiten Benutzerbereich, nachdem der erste Befehl empfangen worden ist, von verwandten Informationen der ersten Operation unter Verwendung eines gemeinsam genutzten Speicherbereichs im Endgerät, um zu bewirken, dass die zweite Anwendung die erste Operation als Antwort auf den ersten Befehl durchführt (S 404),
wobei der Schritt des Sendens, an den zweiten Benutzerbereich, nachdem der erste Befehl empfangen worden ist, der verwandten Informationen der ersten Operation unter Verwendung des gemeinsam genutzten Speicherbereichs im Endgerät, um zu bewirken, dass die zweite Anwendung die erste Operation als Antwort auf den ersten Befehl durchführt, die folgenden Schritte umfasst:
∘ Schreiben, in den gemeinsam genutzten Speicherbereich, nachdem der erste Befehl empfangen worden ist, der zugehörigen Informationen der ersten Operation über eine erste Schnittstelle, wobei die erste Schnittstelle konfiguriert ist, eine Anwendung im ersten Benutzerbereich beim Lesen von Daten aus dem und Schreiben von Daten in den gemeinsamen Speicherbereich zu unterstützen;
∘ Erfassen, über eine zweite Schnittstelle, von Informationen, die in dem gemeinsam genutzten Speicherbereich gespeichert sind, wobei die zweite Schnittstelle konfiguriert ist, eine Anwendung im zweiten Benutzerbereich beim Lesen von Daten aus dem und Schreiben von Daten in den gemeinsam genutzten Speicherbereich zu unterstützen; und
∘ wenn die zugehörigen Informationen der ersten Operation über die zweite Schnittstelle erfasst werden, Lesen der zugehörigen Informationen der ersten Operation aus dem gemeinsam genutzten Speicherbereich, um zu bewirken, dass die zweite Anwendung die erste Operation als Antwort auf den ersten Befehl basierend auf den zugehörigen Informationen der ersten Operation durchführt.

2. Verfahren nach Anspruch 1, wobei der Schritt des Durchführens, nach dem Empfangen des ersten Befehls, einer Authentifizierung der Erlaubnis für den ersten Benutzerbereich zum Zugreifen auf die zweite Anwendung in dem zweiten Benutzerbereich die folgenden Schritte umfasst:
Anzeigen einer zweiten GUI nach dem Empfangen des ersten Befehls, wobei die zweite GUI ein Berechtigungsauthentifizierungsfenster umfasst;
Empfangen eines Zugangskennworts, das von einem Benutzer im Berechtigungsauthentifizierungsfenster eingegeben worden ist; und
Durchführen einer Authentifizierung, basierend auf dem Zugriffskennwort, der Berechtigung für den ersten Benutzerbereich auf die zweite Anwendung zuzugreifen.

3. Verfahren nach einem der Ansprüche 1 bis 2, wobei nach dem Schritt des Sendens, an den zweiten Benutzerbereich, nachdem der erste Befehl empfangen worden ist, von verwandten Informationen der ersten Operation unter Verwendung des gemeinsam genutzten Speicherbereichs im Endgerät, um zu bewirken, dass die zweite Anwendung die erste Operation als Antwort auf den ersten Befehl durchführt, wobei das Verfahren ferner die folgenden Schritte umfasst:
Anzeigen einer dritten GUI der ersten Anwendung, wobei die dritte GUI das Verarbeiten von Ergebnisinformationen der ersten Operation umfasst, die von der zweiten Anwendung durchgeführt wird.

4. Endgerät, wobei das Endgerät einen ersten Benutzerbereich und einen zweiten Benutzerbereich umfasst, wobei der erste Benutzerbereich und der zweite Benutzerbereich unabhängig voneinander sind, wobei die Tatsache, dass der erste Benutzerbereich und der zweite Benutzerbereich voneinander unabhängig sind, bedeutet, dass ein Speicherbereich in dem Endgerät, der dem ersten Benutzerbereich entspricht, und ein Speicherbereich in dem Endgerät, der dem zweiten Benutzerbereich entspricht, unabhängig voneinander sind, und wenn das Endgerät in dem ersten Benutzerbereich betrieben wird, das Endgerät nicht auf Daten zugreifen kann oder diese verwenden kann, die in dem Speicherbereich gespeichert sind, der dem zweiten Benutzerbereich entspricht, und wenn das Endgerät in dem zweiten Benutzerbereich betrieben wird, das Endgerät nicht auf Daten zugreifen kann oder diese verwenden kann, die in dem Speicherbereich gespeichert sind, der dem ersten Benutzerbereich entspricht, und wobei das Endgerät umfasst:
• ein Anzeigemodul (2101), konfiguriert zum Anzeigen einer ersten grafischen Benutzerschnittstelle (GUI), wobei die erste GUI eine Anzeigeschnittstelle einer ersten Anwendung im ersten Benutzerbereich ist;
• ein Beschaffungsmodul (2102), das konfiguriert ist, einen ersten Befehl in der ersten GUI zu empfangen, wobei der erste Befehl verwendet wird, um zu bewirken, dass eine zweite Anwendung eine erste Operation als Antwort auf den ersten Befehl durchführt, und die zweite Anwendung eine Anwendung im zweiten Benutzerbereich ist; und
• ein Bereichsinteraktionsmodul (2103), das konfiguriert ist, nachdem das Beschaffungsmodul den ersten Befehl erhalten hat, verwandte Informationen der ersten Operation unter Verwendung eines gemeinsam genutzten Speicherbereichs im Endgerät an den zweiten Benutzerbereich zu senden, um zu bewirken, dass die zweite Anwendung die erste Operation als Antwort auf den ersten Befehl durchführt,
wobei das Bereichsinteraktionsmodul (2103) speziell konfiguriert ist zum:
∘ Schreiben, in den gemeinsam genutzten Speicherbereich, nachdem das Beschaffungsmodul den ersten Befehl empfängt, der zugehörigen Informationen der ersten Operation über eine erste Schnittstelle, wobei die erste Schnittstelle konfiguriert ist, eine Anwendung im ersten Benutzerbereich beim Lesen von Daten aus dem und Schreiben von Daten in den gemeinsamen Speicherbereich zu unterstützen;
∘ Erfassen, über eine zweite Schnittstelle, von Informationen, die in dem gemeinsam genutzten Speicherbereich gespeichert sind, wobei die zweite Schnittstelle konfiguriert ist, eine Anwendung im zweiten Benutzerbereich beim Lesen von Daten aus dem und Schreiben von Daten in den gemeinsam genutzten Speicherbereich zu unterstützen; und
∘ wenn die zugehörigen Informationen der ersten Operation über die zweite Schnittstelle erfasst werden, Lesen der zugehörigen Informationen der ersten Operation aus dem gemeinsam genutzten Speicherbereich, um zu bewirken, dass die zweite Anwendung die erste Operation als Antwort auf den ersten Befehl basierend auf den zugehörigen Informationen der ersten Operation durchführt.

5. Endgerät nach Anspruch 4, wobei das Anzeigemodul ferner konfiguriert ist, eine zweite GUI anzuzeigen, nachdem das Beschaffungsmodul den ersten Befehl empfangen hat, wobei die zweite GUI ein Berechtigungsauthentifizierungsfenster umfasst;
das Beschaffungsmodul ferner konfiguriert ist, ein Zugriffskennwort zu empfangen, das von einem Benutzer im Berechtigungsauthentifizierungsfenster eingegeben worden ist; und
das Authentifizierungsuntermodul speziell konfiguriert ist, basierend auf dem vom Beschaffungsmodul empfangenen Zugriffskennwort eine Authentifizierung für die Berechtigung des ersten Benutzerbereichs zum Zugriff auf die zweite Anwendung durchzuführen.

6. Endgerät nach einem der Ansprüche 4 bis 5, wobei das Anzeigemodul ferner konfiguriert ist, eine dritte GUI der ersten Anwendung anzuzeigen, nachdem das Bereichsinteraktionsmodul bewirkt, dass die zweite Anwendung die erste Operation als Antwort auf den ersten Befehl ausführt, wobei die dritte GUI die Verarbeitung von Ergebnisinformationen der ersten Operation, die von der zweiten Anwendung durchgeführt wird, umfasst.

7. Computerspeichermedium, umfassend einen Computerbefehl, wobei ein Endgerät das Informationsaustauschverfahren nach einem der Ansprüche 1 bis 3 durchführt, wenn der Computerbefehl auf dem Endgerät durchgeführt wird.

8. Computerprogrammprodukt, wobei ein Computer das Informationsaustauschverfahren nach einem der Ansprüche 1 bis 3 durchführt, wenn das Computerprogrammprodukt auf dem Computer durchgeführt wird.

## Revendications

1. Procédé d'échange d'informations, appliqué à un terminal, dans lequel le terminal comprend un premier espace d'utilisateur et un second espace d'utilisateur, le premier espace d'utilisateur et le second espace d'utilisateur étant indépendants l'un de l'autre, le fait que le premier espace d'utilisateur et le second espace d'utilisateur soient indépendants l'un de l'autre signifiant qu'une zone de stockage du terminal, correspondant au premier espace d'utilisateur, et une zone de stockage du terminal, correspondant au second espace d'utilisateur, sont indépendantes l'une de l'autre et lorsque le terminal fonctionne dans le premier espace d'utilisateur, le terminal ne peut ni accéder aux données stockées dans la zone de stockage correspondant au second espace d'utilisateur ni les exploiter et lorsque le terminal fonctionne dans le second espace d'utilisateur, le terminal ne peut ni accéder aux données stockées dans la zone de stockage correspondant au premier espace d'utilisateur ni les exploiter, le procédé comprenant les étapes suivantes :
• affichage d'une première interface utilisateur graphique (GUI), la première GUI étant une interface d'affichage d'une première application dans le premier espace d'utilisateur (S 401) ;
• réception d'une première instruction dans la première GUI, la première instruction servant à demander à une seconde application d'effectuer une première opération en réponse à la première instruction et la seconde application étant une application du second espace d'utilisateur (S 402) ; et
• transmission, au second espace d'utilisateur après la réception de la première instruction, d'informations associées de la première opération à l'aide d'une zone partagée de stockage dans le terminal, pour amener la seconde application à effectuer la première opération en réponse à la première instruction (S 404),
dans lequel l'étape de transmission, vers le second espace d'utilisateur après la réception de la première instruction, des informations associées de la première opération à l'aide de la zone partagée de stockage dans le terminal, pour amener la seconde application à effectuer la première opération en réponse à la première instruction, comprend les étapes suivantes :
∘ écriture, dans la zone partagée de stockage après la réception de la première instruction, des informations associées de la première opération par l'intermédiaire d'une première interface, la première interface étant configurée pour prendre en charge une application dans le premier espace d'utilisateur lors de la lecture de données et de l'écriture de données dans la zone partagée de stockage ;
∘ détection, par l'intermédiaire de une deuxième interface, des informations stockées dans la zone partagée de stockage, la deuxième interface étant configurée pour prendre en charge une application du second espace d'utilisateur lors de la lecture de données et de l'écriture de données dans la zone partagée de stockage ; et
∘ lorsque les informations associées de la première opération sont détectées par l'intermédiaire de la deuxième interface, à lire les informations associées de la première opération à partir de la zone partagée de stockage, pour amener la seconde application à effectuer la première opération en réponse à la première instruction en fonction des informations associées de la première opération.

2. Procédé selon la revendication 1, dans lequel l'étape consistant à effectuer, après la réception de la première instruction, une authentification sur autorisation pour que le premier espace d'utilisateur accède à la seconde application dans le second espace d'utilisateur comprend les étapes suivantes :
affichage d'une deuxième GUI après la réception de la première instruction, la deuxième GUI comprenant une fenêtre d'authentification d'autorisation ;
réception d'un mot de passe d'accès saisi par un utilisateur dans la fenêtre d'authentification d'autorisation ; et
réalisation, en fonction du mot de passe d'accès, d'une authentification sur l'autorisation pour que le premier espace d'utilisateur accède à la seconde application.

3. Procédé selon l'une quelconque des revendications 1 à 2, dans lequel après l'étape de transmission, au second espace d'utilisateur après la réception de la première instruction, des informations associées de la première opération à l'aide de la zone partagée de stockage dans le terminal, amène la seconde application à effectuer la première opération en réponse à la première instruction, le procédé comprenant en outre les étapes suivantes :
affichage d'une troisième GUI de la première application, la troisième GUI comprenant le traitement des informations de résultat de la première opération effectuée par la seconde application.

4. Terminal, le terminal comprenant un premier d'espace d'utilisateur et un second espace d'utilisateur, le premier espace d'utilisateur et le second espace d'utilisateur étant indépendants l'un de l'autre, le fait que le premier espace d'utilisateur et le second espace d'utilisateur sont indépendants l'un de l'autre signifiant qu'une zone de stockage du terminal correspondant au premier espace d'utilisateur et une zone de stockage du terminal correspondant au second espace d'utilisateur sont indépendantes les unes des autres et lorsque le terminal fonctionne dans le premier espace d'utilisateur, le terminal ne peut ni accéder au données stockées dans la zone de stockage correspondant au second espace d'utilisateur ni les exploiter et lorsque le terminal fonctionne dans le second espace d'utilisateur, le terminal ne peut ni accéder aux données stockées dans la zone de stockage correspondant au premier espace d'utilisateur ni les exploiter et le terminal comprenant :
• un module d'affichage (2101), configuré pour afficher une première interface utilisateur graphique, GUI, la première GUI étant une interface d'affichage d'une première application dans le premier espace d'utilisateur ;
• un module d'obtention (2102), configuré pour recevoir une première instruction dans la première GUI, la première instruction servant à demander à une seconde application d'effectuer une première opération en réponse à la première instruction et la seconde application étant une application du second espace d'utilisateur ; et
• un module d'interaction spatiale (2103), configuré pour transmettre, au second espace d'utilisateur après la réception par le module d'obtention de la première instruction, des informations associées de la première opération à l'aide d'une zone partagée de stockage dans le terminal, pour amener la seconde application à effectuer la première opération en réponse à la première instruction,
le module d'interaction spatiale (2103) étant spécifiquement configuré pour :
∘ écrire, dans la zone partagée de stockage après que le module d'obtention a reçu la première instruction, les informations associées de la première opération par l'intermédiaire d'une première interface, la première interface étant configurée pour prendre en charge une application dans le premier espace d'utilisateur lors de la lecture de données et de l'écriture de données dans la zone partagée de stockage ;
∘ détecter, par l'intermédiaire d'une deuxième interface, des informations stockées dans la zone partagée de stockage, la deuxième interface étant configurée pour prendre en charge une application dans le second espace d'utilisateur lors de la lecture de données et de l'écriture de données dans la zone partagée de stockage ; et
∘ lorsque les informations associées de la première opération sont détectées par l'intermédiaire de la deuxième interface, lire les informations associées de la première opération à partir de la zone partagée de stockage, pour amener la seconde application à effectuer la première opération en réponse à la première instruction en fonction des informations associées de la première opération.

5. Terminal selon la revendication 4, dans lequel le module d'affichage est configuré en outre pour afficher une deuxième GUI après que le module d'obtention a reçu la première instruction, la deuxième GUI comprenant une fenêtre d'authentification d'autorisation ;
le module d'obtention est configuré en outre pour recevoir un mot de passe d'accès saisi par un utilisateur dans la fenêtre d'authentification d'autorisation ; et
le sous-module d'authentification est spéfiquement configuré pour effectuer, en fonction du mot de passe d'accès reçu par le module d'obtention, une authentification sur l'autorisation pour que le premier espace d'utilisateur accède à la seconde application.

6. Terminal selon l'une quelconque des revendications 4 à 5, dans lequel le module d'affichage est configuré en outre pour afficher une troisième GUI de la première application après que le module d'interaction spatiale a amené la seconde application à effectuer la première opération en réponse à la première instruction, la troisième GUI comprenant le traitement des informations de résultat de la première opération effectuée par la seconde application.

7. Support de stockage informatique, comprenant une instruction informatique, dans lequel un terminal effectue le procédé d'échange d'informations selon l'une quelconque des revendications 1 à 3 lorsque l'instruction informatique s'exécute sur le terminal.

8. Produit-programme informatique, un ordinateur effectuant le procédé d'échange d'informations selon l'une quelconque des revendications 1 à 3 lorsque le produit-programme informatique s'exécute sur l'ordinateur.
